# FASCICULE DE BREVET EUROPEEN

(11) **EP 2 912 075 B1**
(45) Date de publication et mention de la délivrance du brevet: **14.12.2016**
(21) Numéro de dépôt: 13780183.3
(22) Date de dépôt: 01.10.2013
(51) Int. Cl.: C08F 2/50, C08L 83/06

(54) **COMPOSITION RETICULABLE/POLYMERISABLE PAR VOIE CATIONIQUE COMPRENANT UN BORATE DE IODONIUM ET DEGAGEANT UNE ODEUR ACCEPTABLE**
KATIONISCH POLYMERISIERBARE/VERNETZBARE ZUSAMMENSETZUNG MIT EINEM JODONIUMBORAT UND FREISETZUNG EINES AKZEPTABLEN GERUCHS
CATIONICALLY CROSS-LINKABLE/POLYMERISABLE COMPOSITION COMPRISING AN IODONIUM BORATE AND RELEASING AN ACCEPTABLE ODOUR

(30) Priorité: 02.10.2012 FR 1202615
(43) Date de publication de la demande: 02.09.2015
(73) Titulaire: Bluestar Silicones France SAS, 69003 Lyon (FR)
(72) Inventeur: FRANCES, Jean-Marc, 69330 Meyzieu (FR); PIBRE, Guillaume, 69190 Sain-Fons (FR)
(74) Mandataire: Mekki, Boualem
(86) Numéro de dépôt international: PCT/FR2013/000257
(87) Numéro de publication internationale: WO 2014/053714

(56) Documents cités:
- WO-A1-2009/083564
- FR-A1- 2 925 908
- JP-A- 2009 102 482
- US-A1- 2005 165 141

## Description

Le domaine de l'invention est celui des compositions utiles comme photoamorceurs cationiques notamment dans les compositions à base de monomères, oligomères et/ou polymères susceptibles d'être polymérisés ou réticulés par voie cationique et comprenant des radicaux fonctionnels réactifs, de manière à obtenir un film, un revêtement ou un matériau massique (par exemple composite) polymérisé et/ou réticulé.

Plus précisément, la présente invention a pour objet :
- des nouvelles compositions utiles comme photoamorceurs cationiques, un nouveau procédé de préparation de ces compositions et leur utilisation comme photoamorceurs pour la polymérisation ou la réticulation par voie cationique de monomères et de prépolymères,
- une composition polymérisable ou réticulable par voie cationique, sous activation thermique, actinique ou par faisceau d'électrons comprenant le photoamorceur selon l'invention et des composés réactifs organosiliciés,
- un procédé de réalisation d'un film ou d'un revêtement sur un support ou un article à partir de la composition polymérisable ou réticulable par voie cationique selon l'invention, et
- un support ou objet dont une surface au moins est revêtue d'un film ou d'un revêtement obtenu à partir de la composition polymérisable ou réticulable par voie cationique selon l'invention.

Le principe d'une réaction de polymérisation photoinduite ou photopolymérisation consiste à exposer une composition comprenant des monomères, oligomères et/ou des polymères porteurs de fonctionnalités réactives (telles qu'acrylique, vinylique, époxy,...) à un rayonnement lumineux pour produire des espèces actives (radicaux libres ou cations) afin d'amorcer une polymérisation. La génèse de ces espèces n'a pas lieu par excitation directe du monomère mais par l'intermédiaire d'un ou plusieurs additif(s) contenu(s) dans la formulation photosensible et plus communément désigné par le terme « photoamorceur ».

Les photoamorceurs sont classés en deux grande familles :
- les photoamorceurs radicalaires, et
- les photoamorceurs cationiques.

Les photoamorceurs radicalaires sont entre autres des cétones aromatiques qui après une exposition sous un rayonnement ultra-violet (UV):
- subissent une scission homolitique en position α de la fonction carbonyle (tels que pour les dérivés d'acylphosphonate, les dérivés d'oxyde d'acylphosphine, les dérivés des éthers de benzoïne et les dérivés de l'acétophénone) avec formation de deux fragments radicalaires, dont l'un est un radical benzoyle (photoamorceurs de type I), ou
- forment des radicaux libres lorsqu'ils sont promus dans leurs états excités par arrachement d'hydrogène d'une molécule donneur d'hydrogène (plus communément désigné par le terme « co-amorceur ») ce qui conduit à la formation d'un radical cétyle inactif et d'un radical amorceur issu du donneur correspondant (photoamorceurs de type II).

Comme exemple de photoamorceurs de type I on peut citer : les α-hydroxycétones, les benzoïnes éther, les cétones α-amino aromatiques et les oxydes d'acylphosphine. Comme exemple de photoamorceurs de type II on peut citer : l'isopropylthioxanthone (ITX), la benzophénone et la camphorquinone (CQ). Comme exemple de co-amorceur on peut citer: le phényltétrazolethiol, le tris(triméthylsilyl)silane et les amines aromatiques telles que l'éthyldiméthylaminobenzoate (EDB).

L'activité des photoamorceurs de type I ou II dans les réactions de polymérisation radicalaire est fortement inhibée par l'oxygène de l'air. En effet, l'oxygène est connue pour avoir des propriétés inhibitrices par transfert d'énergie vis-à-vis des états excités singulet et triplet de ces photoamorceurs et par conversion des radicaux libres en radicaux péroxyles dépourvus d'activité amorçante.

Pour l'autre famille de photoamorceurs, les photoamorceurs cationiques, on distingue souvent deux catégories suivant qu'ils libèrent après photolyse et en présence d'une molécule donneur d'hydrogène:
- un acide de Brönsted tels que les sels d'onium (les sels de diaryliodonium, les sels d'aryldiazonium, les sels d'alkoxypyridinium, les sels de triarylsulfonium et les sels de sulfonium), ou
- un acide de Lewis tels que les sels organométaliques (essentiellement les sels de ferrocénium).

Lors de la photolyse des sels d'onium, l'acide protonique généré est capable d'amorcer la polymérisation cationique de monomères qui ne polymérisent pas par voie radicalaire, tels que les éthers vinyliques ou les monomères hétérocycliques (époxydes, lactones, éthers cycliques, époxysilicones). La principale caractéristique de ce type de polymérisation est son insensibilité vis-à-vis de l'oxygène, ainsi que son caractère « vivant ». En effet, les carbocations ne réagissent pas entre eux, de sorte que la polymérisation, une fois amorcée, pourra se poursuivre dans l'obscurité jusqu'à la consommation complète du monomère.

Pour les sels d'onium c'est la partie cationique qui est responsable de l'absorbtion du rayonnement UV, quant à la partie anionique elle détermine la force de l'acide formé et par conséquent la vitesse d'amorçage de la polymérisation. Plus son caractère nucléophile est faible et plus la réaction de photolyse est rapide. Les différents contre-ions utilisés dans les photoamorceurs cationiques peuvent donc être classés selon leur réactivité (décroissante):

∘ SbF₆⁻> (C₆F₅)B⁻ > AsF₆⁻ > PF₆⁻ > BF₄⁻ > ClO₄⁻.

Suivant les applications, on peut aussi associer au photoamorceur un photosensibilisateur. Un photosensibilisateur est une molécule qui absorbe des longueurs d'ondes différentes de celles absorbées par le photoamorceur étendant ainsi leur sensibilité spectrale. La photosensibilisation consiste en un transfert d'énergie du photosensibilisateur à l'état excité vers le photoamorceur. Le photosensibilisateur augmente la fraction de lumière absorbée par l'amorceur et donc le rendement de photolyse. Ainsi, une plus grande quantité d'espèces réactives est générée et par conséquent la polymérisation est plus rapide. Comme exemple de photosensibilisateurs, on peut citer : l'anthraquinone, l'anthracène, le pyrène, la phénothiazine, la benzophénone, l'acétophénone, les xanthones, les dérivés du carbazole, la fluorénone et les oxydes d'acylphosphine.

Parmi les exemples de photoamorceurs cationiques, on peut citer les sels d'iodonium ou de sulfonium décrits dans le brevet US n° 4 256 828. La référence EP-0 562 897 décrit des amorceurs de polymérisation ou de réticulation associés à des monomères, oligomères ou polymères comprenant dans leur structure des groupements organofonctionnels réactifs. En particulier, le document EP-0 562 897 décrit une composition dont le photoamorceur est en solution à 50 % en poids dans du méthanol et a la structure suivante:

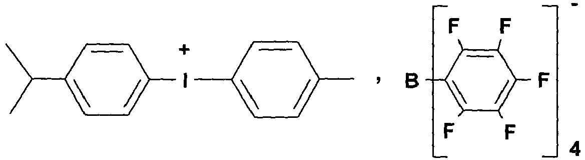

Cette composition est destinée à la réalisation de revêtements sur support papier à partir de monomères époxydés polymérisés et réticulés par irradiation sous U.V.

Or, il se trouve que les photoamorceurs de type borate d'iodonium, s'ils sont particulièrement performants, ont pour inconvénient majeur d'être formulés dans les compositions silicones à partir de solutions alcooliques, le plus souvent dans une solution de méthanol ou d'isopropanol, ce qui présente des problèmes de sécurité liés aux points éclair de ces solvants. De plus, la présence d'une odeur caractéristique, peut-être due à une décomposition du photoamorceur après leur utilisation, fait l'objet d'une perception désagréable par les utilisateurs. Ceci suscite donc un besoin de s'en affranchir surtout dans un environnement industriel où les cadences de production sont de plus en plus élevées. Les solutions pour traiter ce problème dans un environnement industriel passent par l'utilisation d'appareillage coûteux (ventilation, hotte aspirante,...). Suivant les installations et les cadences utilisées, ces odeurs peuvent être même qualifiées de « pollutions olfactives » à partir du moment où elles sont perçues comme une nuisance (excessive) par les utilisateurs.

Il est à noter que dans le présent exposé, il sera donné au terme « odeur » la définition selon la norme ISO 5492 - NF EN 13725 qui le défini comme un attribut organoleptique perceptible par l'organe olfactif quand on respire certaines substances volatiles.

Plus récemment, pour répondre à cette problématique de perception désagréable d'odeur dans les compositions silicones pour encres ou vernis liée à l'utilisation de photoamorceurs cationiques de type sels d'iodonium, la demande de brevet WO2009083564-(A1) propose l'association d'un photoamorceur de type borate d'iodonium avec une classe spécifique de photosensibilisateurs choisis parmi les diéther-anthracènes, les diéther-naphtalènes et les diéther-benzènes.

Le document FR 2 925 908 décrit des compositions comprenant des sels d'iodonium et qui diffèrent de celles de la présente demande en ce que l'alcool n'est pas un alcool de Guerbet.

Ainsi l'industrie des vernis et revêtements sur support est toujours à la recherche d'un nouveau photoamorceur cationique ou d'une composition utile comme photoamorceur cationique:
- permettant d'atteindre des réactivités et des vitesses de polymérisation/réticulation aussi élevées que possible, notamment de manière à pouvoir maintenir des cadences d'enduction industrielle par exemple quand il s'agit de revêtements (vernis),
- et sans pour autant présenter les problèmes liés à la présence d'une odeur désagréable selon la perception des utilisateurs évitant ainsi la mise en place de solutions techniques couteuses pour résoudre ce problème de nuisance olfactive.

La perception d'odeur ou des mélanges d'odeurs est bien connue empiriquement. Néanmoins, la connaissance théorique dans ce domaine bien qu'étant en constant progrès se heurte toujours à la difficulté de prévoir pour un composé chimique ou un mélange de composés chimiques:
- la perception même d'une odeur, ou de son « seuil olfactif » qui est la concentration minimale produisant une odeur perceptible par un panel d'individus,
- la détermination du caractère hédonique lorsqu'une odeur est perçue, et
- l'intensité de l'odeur due à ce composé chimique ou de ce mélange de composés chimiques.

Dans ces circonstances, l'un des objectifs essentiels de la présente invention est de fournir des nouvelles compositions utiles comme photoamorceurs permettant d'atteindre des réactivités et des vitesses de polymérisation/réticulation aussi élevées que possible, notamment de manière à pouvoir les utiliser dans l'industrie du revêtement tel que dans les encres ou vernis, et sans pour autant présenter les problèmes liés à la présence d'une odeur désagréable selon la perception des utilisateurs (en particulier après polymérisation /réticulation) évitant ainsi la mise en place de solutions techniques coûteuses pour résoudre ce problème de nuisance olfactive.

Un autre objectif essentiel de l'invention est de fournir un nouveau procédé de préparation de ces compositions utiles comme photoamorceurs et leur utilisation comme photoamorceurs pour la polymérisation ou la réticulation par voie cationique de monomères et de prépolymères.

Un autre objectif essentiel de l'invention est de fournir une composition polymérisable ou réticulable par voie cationique, sous activation thermique, actinique ou par faisceau d'électrons comprenant les compositions selon l'invention utiles comme photoamorceurs.

Un autre objectif essentiel de l'invention est de fournir un procédé de réalisation d'un film ou d'un revêtement sur un support ou un article à partir de la composition selon l'invention.

Le dernier objet de l'invention est de fournir un support ou un objet dont une surface au moins est revêtue d'un film ou d'un revêtement obtenu à partir de la composition polymérisable ou réticulable par voie cationique selon l'invention.

Ces divers objectifs sont atteints par l'invention qui concerne tout d'abord, dans son premier objet, une nouvelle composition **P** comprenant :
1) au moins un sel d'iodonium **A** de formule **(I)'** suivante: 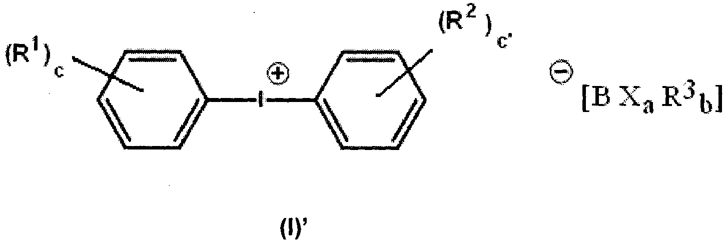 dans laquelle :
   - les symboles R¹ et R² sont identiques ou différents, et représentent chacun un radical alkyle linéaire ou ramifié ayant de 10 à 30 atomes de carbone et de préférence de 10 à 20 atomes de carbone, encore plus préférentiellement de 10 à 15 atomes de carbone, encore plus préférentiellement de 10 à 13 atomes de carbone et encore plus préférentiellement 12 atomes de carbone,
   - a et b sont des nombres entiers tels que 0 ≤ a ≤ 3, 1 ≤ b ≤ 4 et a + b = 4,
   - c et c' sont des nombres entiers, identiques ou différents, allant de 1 à 5 et de préférence c et c' sont égal à 1,
   - les symboles X, identiques ou différents, représentent :
      - un atome de chlore ou de fluor avec 0 ≤ a ≤ 3, ou
      - une fonction OH avec 0 ≤ a ≤ 2, et
   - les symboles R³, identiques ou différents, représentent:
      - un radical phényle substitué par :
         - au moins 2 atomes d'halogène, et de préférence par au moins 2 atomes de fluor, ou
         - au moins un groupement électroattracteur choisi parmi le groupe constitué par: -CF₃, -OCF₃, -NO₂, -CN, -SO₂-CₙF₂ₙ₊,
         - (CO)- CₙF₂ₙ₊₁, -O-CₙF₂ₙ₊₁ et -CₙF₂ₙ₊₁, avec n étant un nombre entier de 1 à 20, ou
      - un radical aryle contenant au moins deux noyaux aromatiques tel que biphényle, naphtyle, éventuellement substitué par au moins un atome d'halogène, notamment un atome de fluor ou un groupement électroattracteur tel que : -CF₃, -OCF₃, -NO₂, -CN, -SO₂-CₙF₂ₙ₊, -(CO)-CₙF₂ₙ₊₁, -O-CₙF₂ₙ₊₁ et CₙF₂ₙ₊₁, avec n étant un nombre entier de 1 à 20,
2) au moins un donneur d'hydrogène **B** choisi parmi le groupe constitué par les alcools de Guerbet de formule **(II)** suivante:

   R⁴ -CH(CH₂OH) - R⁵ **(II)**

   dans laquelle :
   - les symboles R⁴ et R⁵ sont identiques ou différents, et représentent chacun un radical alkyle ayant de 4 à 12 atomes de carbone, et
   - avec la condition supplémentaire que le nombre total d'atomes de carbone dudit alcool de Guerbet est de 10 à 20 atomes de carbone, et
3) éventuellement au moins un stabilisant thermique **C.**

Selon un mode de réalisation préféré, la composition **P** comprend:
1) au moins un sel d'iodonium **A** de formule **(I)** suivante: 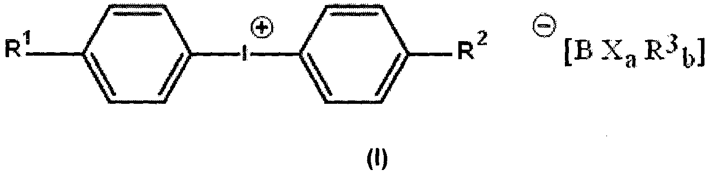 dans laquelle :
   - les symboles R¹ et R² sont identiques ou différents, et représentent chacun un radical alkyle linéaire ou ramifié ayant de 10 à 30 atomes de carbone et de préférence de 10 à 20 atomes de carbone, encore plus préférentiellement de 10 à 15 atomes de carbone, encore plus préférentiellement de 10 à 13 atomes de carbone et encore plus préférentiellement 12 atomes de carbone,
   - a et b sont des nombres entiers tels que 0 ≤ a ≤ 3, 1 ≤ b ≤ 4 et a + b = 4,
   - les symboles X, identiques ou différents, représentent :
      - un atome de chlore ou de fluor avec 0 ≤ a ≤ 3, ou
      - une fonction OH avec 0 ≤ a ≤ 2, et
   - les symboles R³, identiques ou différents, représentent:
      - un radical phényle substitué par :
         - au moins 2 atomes d'halogène, et de préférence par au moins 2 atomes de fluor, ou
         - au moins un groupement électroattracteur choisi parmi le groupe constitué par: -CF₃, -OCF₃, -NO₂, -CN, -SO₂-CₙF₂ₙ₊,
         - (CO)- CₙF₂ₙ₊₁, -O-CₙF₂ₙ₊₁ et -CₙF₂ₙ₊₁, avec n étant un nombre entier de 1 à 20, ou
      - un radical aryle contenant au moins deux noyaux aromatiques tel que biphényle, naphtyle, éventuellement substitué par au moins un atome d'halogène, notamment un atome de fluor ou un groupement électroattracteur tel que : -CF₃, -OCF₃, -NO₂, -CN, -SO₂-CₙF₂ₙ₊, -(CO)-CₙF₂ₙ₊₁, -O-CₙF₂ₙ₊₁ et CₙF₂ₙ₊₁, avec n étant un nombre entier de 1 à 20,
2) au moins un donneur d'hydrogène **B** choisi parmi le groupe constitué par les alcools de Guerbet de formule **(II)** suivante:

   R⁴ -CH(CH₂OH) - R⁵ **(II)**

   dans laquelle :
   - les symboles R⁴ et R⁵ sont identiques ou différents, et représentent chacun un radical alkyle ayant de 4 à 12 atomes de carbone, et
   - avec la condition supplémentaire que le nombre total d'atomes de carbone dudit alcool de Guerbet est de 10 à 20 atomes de carbone, et
3) éventuellement au moins un stabilisant thermique **C.**

Il est du mérite des inventeurs d'avoir sélectionné une association entre un photoamorceur spécifique qui est un borate d'iodonium ayant pour sa partie cationique au niveau de ses noyaux aromatiques des groupements radicaux alkyles ayant de 10 à 30 atomes de carbone et un donneur d'hydrogène **B** choisi dans une classe spécifique des alcools qui est celle des alcools de Guerbet, de sorte qu'il n'y ait plus de problèmes liés à la présence d'une odeur désagréable perçue par les utilisateurs et évitant ainsi la mise en place de solutions techniques coûteuses pour résoudre ce problème de nuisance olfactives.

Un autre avantage important concerne la meilleure réactivité de cette nouvelle composition photoamorceur comparée aux photoamorceurs de l'art antérieur permettant ainsi d'augmenter les cadences d'enduction par exemple quand il s'agit de revêtements (vernis).

De plus, la nouvelle composition **P** présente l'avantage de diminuer la production de composés organiques volatils (COV) lorsqu'elle est utilisée comme photoamorceur cationique.

La nouvelle composition **P** présente aussi l'avantage d'éliminer le risque inflammable en conférant au mélange un point éclair élevé contrairement aux photoamorceurs borate d'iodonium de l'art antérieur qui sont formulés dans des alcools tels que le méthanol ou l'isopropanol.

Dans un mode de réalisation préféré, l'alcool de Guerbet selon l'invention peut aussi jouer le rôle supplémentaire de solvant pour le sel d'iodonium **A** de manière à ce que la composition **P** se présente sous la forme d'un mélange du sel d'iodonium **A** en solution dans le donneur d'hydrogène **B** selon l'invention. L'homme du métier saura ajuster les concentration de chacun des composants et le mode opératoire de manière à obtenir une solution plus ou moins concentrée en sel d'iodonium.

De préférence, la composition **P** comprend:
a) 1 à 95 parties en poids, de préférence de 20 à 80 parties en poids par rapport au poids total de la composition **P** du ou des sel(s) d'iodonium **A**,
b) 5 à 99 parties en poids, de préférence de 20 à 80 parties en poids par rapport au poids total de la composition **P** d'au moins un donneur d'hydrogène **B** qui est de préférence un alcool de Guerbet, et
c) 0 à 5 parties en poids par rapport au poids total de la composition **P** d'au moins un stabilisant thermique **C.**

Les alcools de Guerbet sont bien connus et sont disponibles commercialement. Ils présentent l'avantage de présenter des points de fusion faibles alors qu'à nombre de carbones équivalent leurs homologues linéaires sont à l'état solide.

Selon un mode de réalisation préféré, le donneur d'hydrogène **B** est un alcool de Guerbet qui a pour formule suivante : 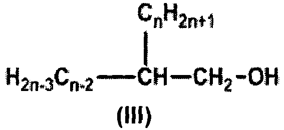 dans laquelle n est un nombre entier de 6 à 10.

Selon un autre mode de réalisation préféré de l'invention, le donneur d'hydrogène **B** est choisi parmi le groupe constitué par les alcools de Guerbet suivants : 2-butyl-1-octanol, 2-pentyl-1-nonanol, 2-hexyldécan-1-ol, 2-octyldecan-1-ol, 2-octyldodecan-1-ol et leurs mélanges.

Selon la nomenclature utilisée, on peut citer les alcools de Guerbets suivants qui peuvent être commercialisés pour certains sous forme de 2 ou plusieurs composants en mélange :
- 2-butyl-1-octanol, n° CAS : 3913-02-8, aussi dénommé: 5-(hydroxyméthyl)undécane; Guerbet C₁₂; Guerbet dodécanol; Isofol^{®} 12 ou Jarcol^{®} I-12; disponible chez SASOL GERMANY,
- 2-pentyl-1-nonanol, n° CAS : 5333-48-2,
- 2-hexyldécan-1-ol, n° CAS : 2425-77-6, Guerbet C₁₆; Guerbet hexadécanol;Guerbitol 16;Isofol^{®} 16; ou Jarcol^{®} 1-16,
- 2-octyldécan-1-ol, ou l'octydécanol (CAS: 70693-04-8) disponible chez SASOL GERMANY ou que l'on peut trouver en mélange sous l'appellation Jarcol^{®} I-18T (mélange des alcools de Guerbet en C₁₆, C₁₈ et C₂₀), et
- 2-octyldodécan-1-ol, n° CAS: 5333-42-6, ou 2-octyl-1-dodécanol Jarcol^{®} I-20 (les produits de la gamme Jarcol^{®} sont commercialisés par la société Jarchem Inovative Ingrédient ou disponibles dans les sociétés suivantes : COGNIS (BASF) JAPAN ou KAO CORPORATION JAPAN.

De préférence, l'anion du sel d'iodonium **A** est choisi parmi le groupe constitué par les anions suivants: [B(C₆F₅)₄]⁻, [B (C₆H₃(CF₃)₂)₄]⁻, [B (C₆H₄OCF₃)₄]⁻, [B (C₆H₄CF₃)₄]⁻, [(C₆F₅)₂ B F₂]⁻, [C₆F₅ BF₃]⁻ et [B (C₆H₃F₂)₄]⁻ et de préférence dans le sous-groupe constitué par les anions suivants : B(C₆F₅)₄⁻ et [B (C₆H₃(CF₃)₂)₄]⁻.

De préférence, pour la partie cationique du sel d'iodonium **A**, les symboles R¹ et R² sont identiques ou différents, et représentent chacun un radical alkyle choisi parmi le groupe constitué par les radicaux suivants: 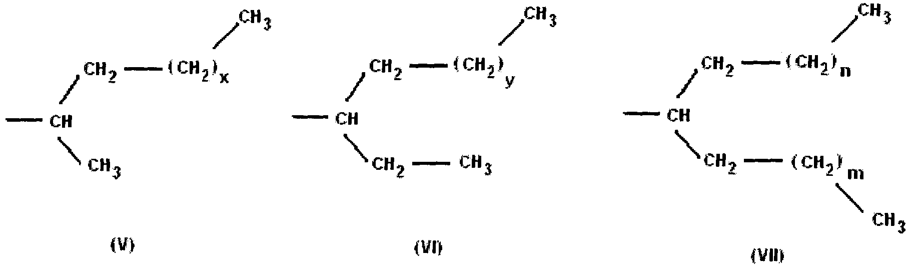 avec :
- x est nombre entier allant de 6 à 16 et de préférence de 6 à 11,
- y est nombre entier allant de 5 à 15 et de préférence de 5 à 10, et
- n et m sont des nombres entiers identiques ou différents et dont la somme n+m est comprise entre 5 et 15 (bornes incluses).

Suivant le mode de préparation utilisé, le sel d'iodonium **A** peut se présenter sous la forme d'un mélange de sels de structures similaires pour la partie anionique mais de structures variées pour la partie cationique d'alkylphényliodonium dont la chaîne alkyle est linéaire ou ramifiée et composée de 10 à 30 atomes de carbone et de préférence de 10 à 20 atomes de carbone, encore plus préférentiellement de 10 à 15 atomes de carbone, encore plus préférentiellement de 10 à 13 atomes de carbone et encore plus préférentiellement de 12 atomes de carbone.

Selon un mode de réalisation préféré, le sel d'iodonium **A** a la formule **(IV)** suivante: 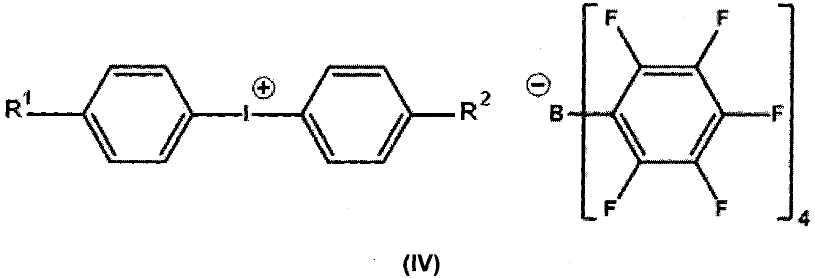 dans laquelle :
- les symboles R¹ et R² sont identiques ou différents, et représentent chacun un radical alkyle linéaire ou ramifié ayant de 10 à 30 atomes de carbone et de préférence de 10 à 20 atomes de carbone et encore plus préférentiellement de 10 à 15 atomes de carbone.

Selon un mode de réalisation particulièrement préféré, les sels d'iodonium **A** sont choisis parmi les structures suivantes :

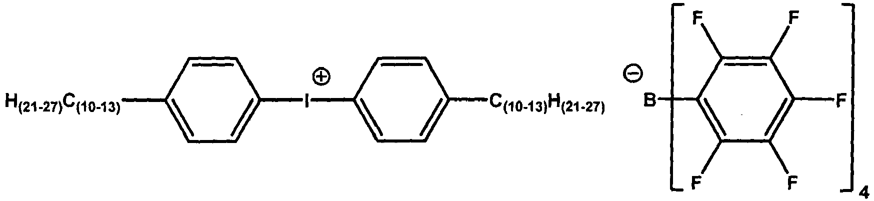

Le sel d'iodonium **A** faisant l'objet de la présente invention peutt être préparé par réaction d'échange entre un sel de l'entité cationique (halogénure tel que par exemple chlorure, iodure) avec un sel de métal alcalin de l'entité anionique (sodium, lithium, ou potassium). Les conditions opératoires (quantités respectives des réactifs, choix des solvants, durée, température, agitation) sont à la portée de l'homme de l'art; celles-ci doivent permettre de récupérer le borate d'onium recherché sous forme solide par filtration du précipité formé ou sous forme huileuse par extraction à l'aide d'un solvant approprié. Les modes opératoires de synthèse des iodures des entités cationiques susvisées, sont connus en soi. A ce sujet, on se reportera notamment au brevet EP-0 562 897. Les modes opératoires de synthèse des sels de métal alcalin de l'entité anionique borate, sont également connus en soi ; notamment par exemple, dans le brevet EP-0 562 897.

Selon un autre mode de réalisation, l'invention concerne aussi un procédé de préparation de la composition **P** telle que définie dans le présent mémoire comprenant les étapes suivantes:
a) on prépare des sels précurseurs de formule **(VIII)'** et **(IX)'** suivantes: 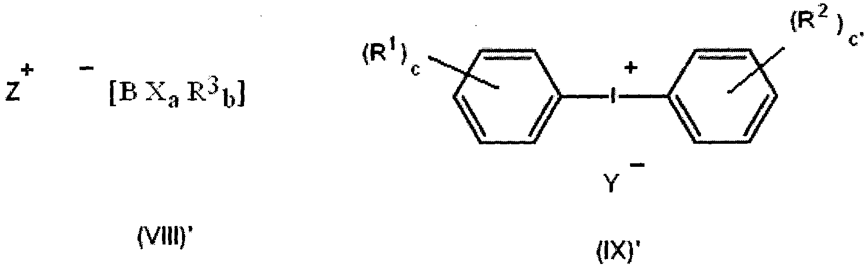 formules dans lesquelles :
   - les symboles R¹ et R² sont identiques ou différents, et représentent chacun un radical alkyle linéaire ou ramifié ayant de 10 à 30 atomes de carbone et de préférence de 10 à 20 atomes de carbone et encore plus préférentiellement de 10 à 15 atomes de carbone,
   - a et b sont des nombres entiers tels que 0 ≤ a ≤ 3, 1 ≤ b ≤ 4 et a + b = 4,
   - c et c' sont des nombres entiers, identiques ou différents, allant de 1 à 5 et de préférence c et c' sont égal à 1
   - les symboles X, identiques ou différents, représentent :
      - un atome de chlore ou de fluor avec 0 ≤ a ≤ 3, ou
      - une fonction OH avec 0 ≤ a ≤ 2, et
   - les symboles R³, identiques ou différents, représentent:
      - un radical phényle substitué par :
         - au moins 2 atomes d'halogène, et de préférence par au moins 2 atomes de fluor, ou
         - au moins un groupement électroattracteur choisi parmi le groupe constitué par: -CF₃, -OCF₃, -NO₂, -CN, -SO₂-CₙF₂ₙ₊, -(CO)- CₙF_{2n+1,} -O-CₙF₂ₙ₊₁ et CₙF₂ₙ₊₁, avec n étant un nombre entier de 1 à 20, ou
      - un radical aryle contenant au moins deux noyaux aromatiques tel que biphényle, naphtyle, éventuellement substitué par au moins un atome d'halogène, notamment un atome de fluor ou un groupement électroattracteur tel que : -CF₃, -OCF₃, -NO₂, -CN, -SO₂-CₙF₂ₙ₊, -(CO)-CₙF₂ₙ₊₁, -O-CₙF₂ₙ₊₁ et CₙF₂ₙ₊₁, avec n étant un nombre entier de 1 à 20,
   - le symbole Z⁺ est un cation d'un atome ou d'un groupement d'atomes et de préférence le symbole Z⁺ est Na⁺, Li⁺ ou K⁺, et
   - le symbole Y⁻ est un anion d'un atome ou un groupement d'atomes et de préférence Y⁻ est l'anion bromure (Br⁻) ou iodure (I⁻),
b) on prépare un mélange n° 1 constitué d'un sel précurseur de formule **(VIII)** et d'eau et un mélange n° 2 constitué d'au moins un sel précurseur de formule **(IX)** et d'au moins un alcool de Guerbet selon l'invention et tel que décrit ci-dessus,
c) dans un réacteur sous agitation et éventuellement sous reflux, on place le mélange n° 1 ou le mélange n° 2, et de préférence on élève et maintient la température du réacteur dans un intervalle compris entre 30 et 80°C et encore plus préférentiellement dans un intervalle compris entre 50 et 80°C
d) puis on ajoute sous agitation soit le mélange n° 1 lorsqu'à l'étape c) le mélange n° 2 est présent dans le réacteur, soit le mélange n° 2 lorsqu'à l'étape c) le mélange n° 1 est présent dans le réacteur, et de préférence on maintient la température du réacteur dans un intervalle compris entre 30 et 80°C et encore plus préférentiellement dans un intervalle compris entre 50 et 80°C,
e) lorsque la réaction est terminée, on refroidit éventuellement le réacteur et on sépare la phase organique de la phase aqueuse,
f) éventuellement on lave la phase organique à l'aide d'eau,
g) éventuellement on dévolatilise la phase organique, et
h) on récupère la phase organique qui est la composition **P** à laquelle on ajoute éventuellement au moins un stabilisant thermique **C.**

De préférence, le procédé de préparation de la composition **P** comprend les étapes suivantes:
a) on prépare des sels précurseurs de formule **(VIII)** et **(IX)** suivantes: 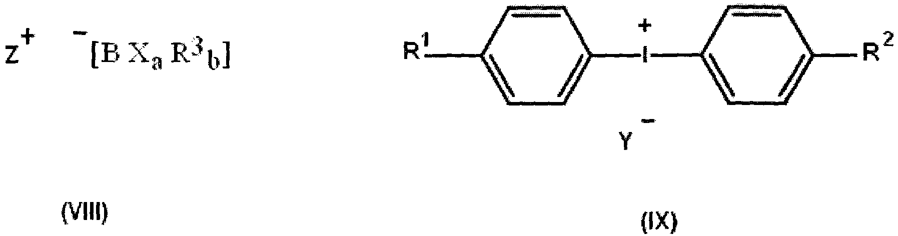 formules dans lesquelles :
   - les symboles R¹ et R² sont identiques ou différents, et représentent chacun un radical alkyle linéaire ou ramifié ayant de 10 à 30 atomes de carbone et de préférence de 10 à 20 atomes de carbone et encore plus préférentiellement de 10 à 15 atomes de carbone,
   - a et b sont des nombres entiers tels que 0 ≤ a ≤ 3, 1 ≤ b ≤ 4 et a + b = 4,
   - les symboles X, identiques ou différents, représentent :
      - un atome de chlore ou de fluor avec 0 ≤ a ≤ 3, ou
      - une fonction OH avec 0 ≤ a ≤ 2, et
   - les symboles R³, identiques ou différents, représentent:
      - un radical phényle substitué par :
         - au moins 2 atomes d'halogène, et de préférence par au moins 2 atomes de fluor, ou
         - au moins un groupement électroattracteur choisi parmi le groupe constitué par: -CF₃, -OCF₃, -NO₂, -CN, -SO₂-CₙF₂ₙ₊, -(CO)- CₙF₂ₙ₊₁, -O-CₙF₂ₙ₊₁ et CₙF₂ₙ₊₁, avec n étant un nombre entier de 1 à 20, ou
      - un radical aryle contenant au moins deux noyaux aromatiques tel que biphényle, naphtyle, éventuellement substitué par au moins un atome d'halogène, notamment un atome de fluor ou un groupement électroattracteur tel que : -CF₃, -OCF₃, -NO₂, -CN, -SO₂-CₙF₂ₙ₊, -(CO)-CₙF₂ₙ₊₁, -O-CₙF₂ₙ₊₁ et CₙF₂ₙ₊₁, avec n étant un nombre entier de 1 à 20,
   - le symbole Z⁺ est un cation d'un atome ou d'un groupement d'atomes et de préférence le symbole Z⁺ est Na⁺, Li⁺ ou K⁺, et
   - le symbole Y⁻ est un anion d'un atome ou un groupement d'atomes et de préférence Y⁻ est l'anion bromure (Br⁻) ou iodure (I⁻),
b) on prépare un mélange n° 1 constitué d'un sel précurseur de formule **(VIII)** et d'eau et un mélange n° 2 constitué d'au moins un sel précurseur de formule **(IX)** et d'au moins un alcool de Guerbet selon l'invention et tel que décrit ci-dessus,
c) dans un réacteur sous agitation et éventuellement sous reflux, on place le mélange n° 1 ou le mélange n° 2, et de préférence on élève et maintient la température du réacteur dans un intervalle compris entre 30 et 80°C et encore plus préférentiellement dans un intervalle compris entre 50 et 80°C
d) puis on ajoute sous agitation soit le mélange n° 1 lorsqu'à l'étape c) le mélange n° 2 est présent dans le réacteur, soit le mélange n° 2 lorsqu'à l'étape c) le mélange n° 1 est présent dans le réacteur, et de préférence on maintient la température du réacteur dans un intervalle compris entre 30 et 80°C et encore plus préférentiellement dans un intervalle compris entre 50 et 80°C,
e) lorsque la réaction est terminée, on refroidit éventuellement le réacteur et on sépare la phase organique de la phase aqueuse,
f) éventuellement on lave la phase organique à l'aide d'eau,
g) éventuellement on dévolatilise la phase organique, et
h) on récupère la phase organique qui est la composition **P** à laquelle on ajoute éventuellement au moins un stabilisant thermique **C.**

Comme exemples de sels précurseurs **(VIII)** on peut citer les sels suivants:
triphénylméthylium tétrakis(pentafluorophényl)borate (n°CAS : 136040-19-2), lithium tétrakis(pentafluorophényl)borate de lithium (dans sa forme complexifiée avec un ligand éthyl éther, n°CAS :155543-02-5, tétrakis(pentafluorophényl)borate de sodium (n°CAS : 149213-65-0) et le tétrakis(pentafluorophényl)borate de potassium (n°CAS : 89171-23-3) qui sont des composés bien connus et disponibles commercialement. Les sels précurseurs de formule **(VIII)** préférés sont le tétrakis(pentafluorophényl)borate de sodium (n°CAS : 149213-65-0) et le tétrakis(pentafluorophényl)borate de potassium (n°CAS : 89171-23-3).

Les sels précurseurs de formule **(IX)** sont des composé bien connus et peuvent être préparés selon le protocole décrit dans la demande de brevet EP-2428501-A1. Ces sels précurseurs de formule **(IX)** peuvent se présenter sous la forme de mélange de deux ou trois composés ou plus.

Selon un mode de réalisation préféré, à l'étape b) du procédé selon l'invention on effectue la préparation sous agitation du mélange n° 2 constitué d'au moins un sel précurseur de formule **(IX)** et d'au moins un alcool de Guerbet dans un réacteur à une température comprise entre 40 et 85°C et encore plus préférentiellement entre 50 et 80°C, puis à l'étape c) on maintient la température et à l'étape d) le mélange n°1 est à ajouté au mélange n°2 en maintenant la température du réacteur entre 40 et 85°C et encore plus préférentiellement entre 50 et 80°C.

Dans un mode de réalisation préféré, l'alcool de Guerbet selon l'invention peut aussi jouer le rôle supplémentaire de solvant pour le sel d'iodonium **A** de manière à ce que la composition **P** se présente sous la forme d'un mélange du sel d'iodonium **A** en solution dans le donneur d'hydrogène **B** selon l'invention. L'homme du métier saura ajuster les concentration de chacun des composants de manière à obtenir une solution plus ou moins concentrée d'au moins un sel précurseur de formule **(IX)** et d'au moins un alcool de Guerbet.

Un ou plusieurs stabilisants thermique **C** peut (peuvent) être present(s) dans la composition **P** selon l'invention ou dans une composition à polymériser et/ou à réticuler et dans laquelle la composition **P** est présente et est utilisée comme photoamorceur cationique. Des exemples de stabilisants thermique **C** sont décrits dans l'article de J. F. Rabek, "Photostabilization of Polymers; Principles and Applications", Elsevier Applied Science, NY, 1990 ou dans la référence "Plastics Additives Handbook", 5th édition, edité par H. Zweifel, Hanser Publishers, 2001.

Selon un mode préféré de l'invention le stabilisant thermique **C** est choisi parmi le groupe constitué par: une amine, un composé dont la structure chimique comprend un groupement stériquement encombré et une fonction nitroxyle, un composé dont la structure chimique comprend un groupement stériquement encombré et une fonction phénol, un composé organique phosphoré et leurs combinaisons.

Comme exemples plus spécifiques, on peut citer :
- des phosphites organiques et des phosphonites, comme les composés suivants : triphényl phosphite, diphénylalkyl phosphites, phényldialkyl phosphites, tri-(nonylphényl) phosphite, trilauryl phosphite, trioctadécyl phosphite, di-stéaryl-pentaérythritol diphosphite, tris-(2,4-di-tert-butylphényl) phosphite, di-isodécylpentaérythritol diphosphite, di-(2,4-di-tert-butylphényl) pentaérythritol diphosphite, tristéarylsorbitol triphosphite et tétrakis-(2,4-di-tert-butylphényl)-4,4'-biphényldiphosphonite ;
- des exemples de composés organiques phosphorés sont décrits dans le brevet US-6,444,733, des composés phosphorés comprenant du sulfure comme par exemple les composés suivants : trisméthylthiophosphite, triséthylthiophosphite, trispropylthiophosphite, trispentylthiophosphite, trishexylthiophosphite, trisheptylthiophosphite, trisoctylthiophosphite, trisnonylthiophosphite, trislaurylthiophosphite, trisphénylthiophosphite, trisbenzylthiophosphite, bispropiothiométhylphosphite, bispropiothiononylphosphite, bisnonylthiométhylphosphite, bisnonylthiobutylphosphite, méthyléthylthiobutylphosphite, méthyléthylthiopropiophosphite, méthylnonylthiobutylphosphite, méthylnonylthiolaurylphosphite, and pentylnonylthiolaurylphosphite; ou
- des composés comprenant un groupement stériquement encombré et une fonction nitroxyle sont par exemple décrits dans les brevets US-6,337,426 ou US-5,254,760.
- des amines comprenant des groupements stériquement encombrés comme par exemple les composés suivants : bis-(2,2,6,6-tétraméthylpipéridyl) sébacate, bis-(1,2,2,6,6-pentaméthylpipéridyl) sébacate, n-butyl-3,5-di-tert-butyl-4-hydroxybenzyl malonic acid bis-(1,2,2,6,6-pentaméthylpipéridyl)ester, le produit de condensation entre 1-hydroxyéthyl-2,2,6,6-tétraméthyl-4-hydroxypipéridine et l'acide succinique, le produit de condensation entre la N,N'-(2,2,6,6-tétraméthylpiperidyl)-hexaméthylènediamine et 4-tert-octyl-amino-2,6-dichloro-s-triazine, tris-(2,2,6,6-tétraméthylpipéridyl)-nitrilotriacétate, tétrakis-(2,2,6,6-tétramethyl-4-pipéridyl)-1,2,3,4-butanetétracarboxylate, and 1,1'-(1,2-éthanediyl)-bis-(3,3,5,5-tétraméthylpipérazinone). Des exemples de stabilisants amines comportant des groupements stériquement encombrés et leur mise en oeuvre se trouve dans les documents EP-162524, EP-920483 ou EP-263561.

En général, la quantité ajoutée en stabilisant varie suivant sa nature. A titre indicatif, des quantités comprises entre 1 et 3000 ppm sont fréquentes lorsqu'il s'agit d'amines stériquement encombrées.

Un autre objet de l'invention consiste en l'utilisation de la composition **P** selon l'invention et telle que définie ci-dessus comme photoamorceur cationique.

Un autre objet de l'invention consiste en une composition **R** polymérisable et/ou réticulable par voie cationique, sous activation thermique et/ou actinique et/ou par faisceau d'électrons comprenant :
- au moins un composé organosilicié **D** polymérisable et/ou réticulable par voie cationique;
- une quantité catalytique efficace de la composition **P** telle que définie ci-dessus comme photoamorceur cationique,
- éventuellement une quantité efficace d'au moins un photosensibilisateur **E,**
- éventuellement au moins un solvant organique **F,**
- éventuellement au moins un additif **Q,**
- éventuellement au moins un stabilisant thermique **C** tel que défini ci-dessus, et
- événtuellement au moins un monomères, oligomères et/ou polymères **H** à groupements organofonctionnels d'espèce acrylate;

Par « quantité catalytique efficace » ou « quantité efficace », on entend selon l'invention la quantité suffisante pour amorcer la polymérisation et/ou la réticulation. Suivant les concentration en sel d'iodonium **A** dans la composition **P,** cette quantité sera ajustée de manière à ajouter une quantité comprise entre 0,01 et 20 parties en poids de sel d'iodonium **A**, le plus souvent entre 0,05 et 8 parties en poids pour polymériser et/ou réticuler 100 parties en poids du composé organosilicié **D** polymérisable et/ou réticulable par voie cationique.

Selon un mode de réalisation particulier de l'invention, le composé organosilicié **D** est un polyorganosiloxane comprenant au moins deux atomes de silicium et comprenant: - au moins un motif siloxyle de formule **(VIII)** et de préférence au moins deux motifs siloxyle de formule **(VIII)** suivante :

Z¹(R⁰)ₐSiO_{(3-a)/2} **(VIII)**

dans laquelle :
- a = 0, 1 ou 2,
- R⁰, identique ou différent lorsque a>1, représente un radical alkyle, cycloalkyle, aryle, alcényle, hydrogéno ou alcoxy et de préférence un alkyle en C₁ à C₆,
- Z¹, identique ou différent lorsque le nombre de motifs de formule **(VIII)** est supérieur à 1, est un substituant organique comportant au moins une fonction réactive **G** choisie parmi le groupe constitué par les fonctions : époxy, alcénylether, oxétane, dioxolane, (mét)acrylate et carbonate, et de préférence Z¹ est choisi parmi le groupe constitué par les fonctions époxy et dioxolane, et
- éventuellement au moins un motif siloxyle de formule **(IX)** suivante: 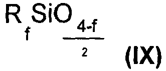 dans laquelle :
   - f = 0, 1, 2 ou 3, et
   - les symboles R représentent, indépendamment les uns des autres, des radicaux monovalent choisis parmi le groupe constitué par un alkyle, un cycloalkyle, un aryle, un alcényle, un radical hydrogéno et un radical alcoxy.

Dans un autre mode de réalisation, le composé organosilicié **D** polymérisable et/ou réticulable par voie cationique est liquide à température ambiante ou thermofusible à température inférieure à 100°C, de nature polyorganosiloxanique et est constitué de motifs siloxyles de formule (**X**) et terminés par des motifs siloxyle de formule (**XI**) ou cycliques constitués de motifs siloxyle de formule (**X**) représentées ci-dessous : 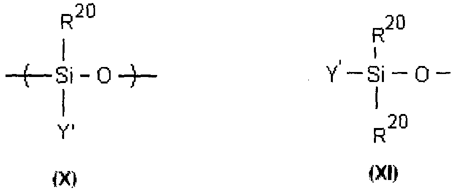 dans lesquelles :
- les symboles R²⁰ sont identiques ou différents et représentent :
   - un radical alkyle linéaire ou ramifié contenant de 1 à 8 atomes de carbone, éventuellement substitué par au moins un halogène, de préférence le fluor, les radicaux alkyle étant de préférence méthyle, éthyle, propyle, octyle ou 3,3,3-trifluoropropyle,
   - un radical cycloalkyle contenant de 5 à 8 atomes de carbone, éventuellement substitué,
   - un radical aryle contenant de 6 à 12 atomes de carbone pouvant être substitué, de préférence phényle ou dichlorophényle, ou
   - une partie aralkyle ayant une partie alkyle contenant de 5 à 14 atomes de carbone et une partie aryle contenant de 6 à 12 atomes de carbone, substituée éventuellement sur la partie aryle par des halogènes, des alkyles et/ou des alkoxyles contenant de 1 à 3 atomes de carbone, et
- les symboles Y' sont semblables ou différents et représentent :
   - un groupement R²⁰,
   - un radical hydrogène, ou
   - un groupement organofonctionnel contenant au moins une fonction choisie parmi le groupe constitué par les fonctions : époxy, alcényléther, oxétane, dioxolane, (mét)acrylate et carbonate, et de préférence est choisi parmi le groupe constitué par les fonctions époxy et dioxolaneet pouvant être relié à l'atome de silicium par l'intermédiaire d'un radical divalent contenant de 2 à 20 atomes de carbone et pouvant éventuellement contenir au moins un hétéroatome, de préférence de l'oxygène, et
- avec la condition que pour au moins un des motifs siloxyles **(X)** ou **(XI)** le symbole **Y'** est un groupement organofonctionnel réticulable par voie cationique et de préférence choisi parmi le groupe constitué par: un époxy, un alcénylether, un oxétane, un dioxolane, un (mét)acrylate et un carbonate, et de préférence **Y'** est choisi parmi le groupe constitué par les fonctions époxy et dioxolane.

Selon une autre variante avantageuse de l'invention, le composé organosilicié **D** est un polyorganosiloxane comportant de 1 à 10 groupements organofonctionnels par mole. Pour un groupement époxyfonctionnel cela correspond à des taux d'époxyde variant de 20 à 2000 mmol/100 g de polyorganosiloxane (composé organosilicié **D**). Des exemple de polyorganosiloxanes avec des groupements organofonctionnels époxy (« polyorganosiloxanes époxy fonctionnels») se trouvent notamment dans les brevets DE-A-4.009.889, EP-A-396.130, EP-A-355.381, EP-A-105.341, FR-A-2.110.115 ou FR-A-2.526.800. Les polyorganosiloxanes époxy fonctionnels peuvent être préparés par réaction d'hydrosilylation entre des huiles à motifs ≡Si-H et des composés époxyfonctionnels tels que le vinyl-4 cyclohexèneoxyde ou l'allylglycidyléther.

Lorsque le composé organosilicié **D** est un polyorganosiloxane, il se présente généralement sous forme de fluide à structure chimique linéaire avec une viscosité dynamique, de l'ordre de 10 à 10 000 mPa.s à 25°C, généralement de l'ordre de 50 à 5 000 mPa.s à 25°C et, plus préférentiellement encore, de 100 à 600 mPa.s à 25°C, ou des gommes présentant une masse moléculaire de l'ordre de 1 000 000 ou plus.

Par « viscosité dynamique » on entend la contrainte de cisaillement qui accompagne l'existence d'un gradient de vitesse d'écoulement dans la matière. Toutes les viscosités dont il est question dans le présent mémoire correspondent à une grandeur de viscosité dynamique qui est mesurée, de manière connue en soi, à 25°C. La viscosité est généralement mesurée à l'aide d'un viscosimètre BROOKFIELD.

Lorsqu'il s'agit de polyorganosiloxanes cycliques, ceux-ci sont constitués de motifs **(X)** qui peuvent être, par exemple, du type dialkylsiloxy ou alkylarylsiloxy. Ces polyorganosiloxanes cycliques présentent une viscosité de l'ordre de 1 à 5000 mPa.s.

Selon un autre mode de réalisation de l'invention, le composé organosilicié **D** est un silane comprenant un substituant organique comprenant au moins une fonction réactive **G** choisie parmi le groupe constitué par les fonctions : oxirane, alcényléther, oxétane, dioxolane, (mét)acrylate et carbonate, et de préférence choisie parmi le groupe constitué par les fonctions époxy et dioxolane.

De préférence, la fonction réactive G du composé organosilicié D est choisie parmi les groupements (1) à (11) suivants : 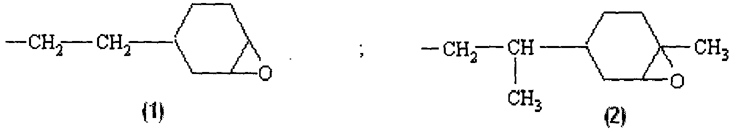 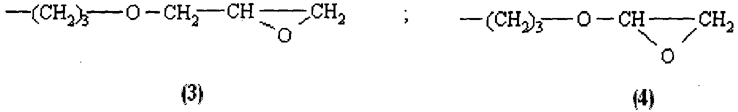 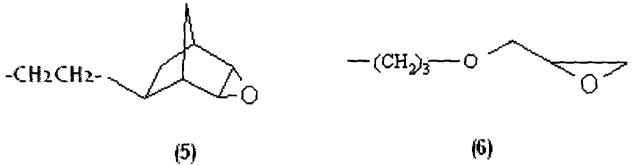 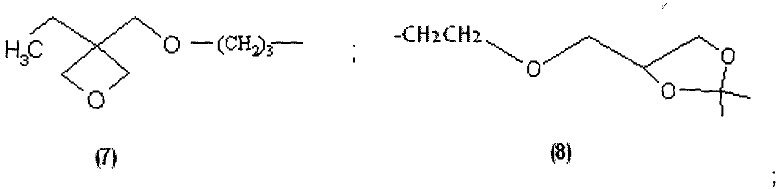 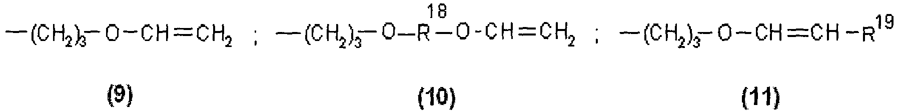 formules dans lesquelles :
- R¹⁸ représente :
   - un radical alkylène linéaire ou ramifié en C₁-C₁₂, éventuellement substitué,
   - ou un radical arylène en C₅-C₁₂, de préférence phénylène, éventuellement substitué, de préférence par un à trois groupements alkyles en C₁-C₆, et
- R¹⁹ représente un radical alkyle linéaire ou ramifié en C₁-C₆.

Lorsque le composé organosilicié **D** est un polyorganosiloxane il est de préférence choisi parmi le groupe constitué par les composés **(12)** à **(24)** suivants : 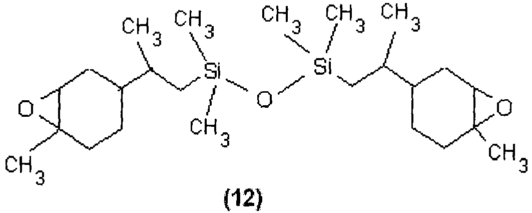 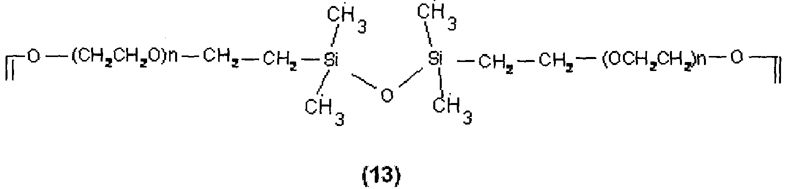 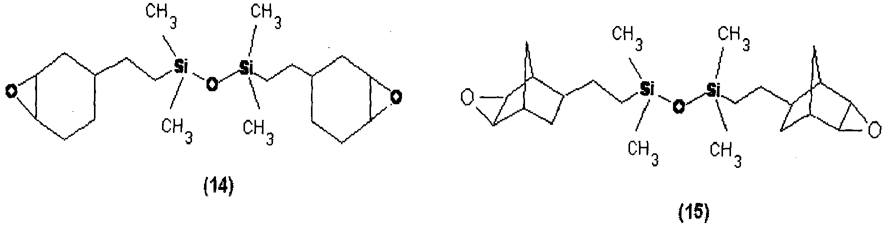 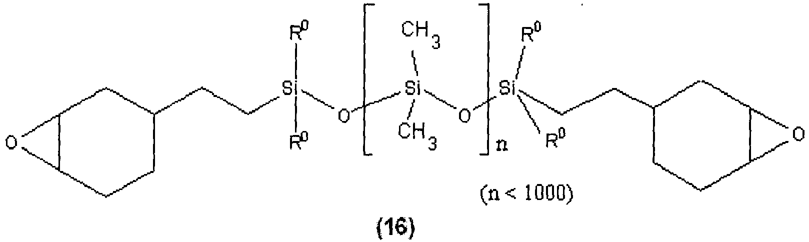 formule dans laquelle R° est un groupement alkyl de C₁ à C₂₀ et de préférence un groupement méthyle. 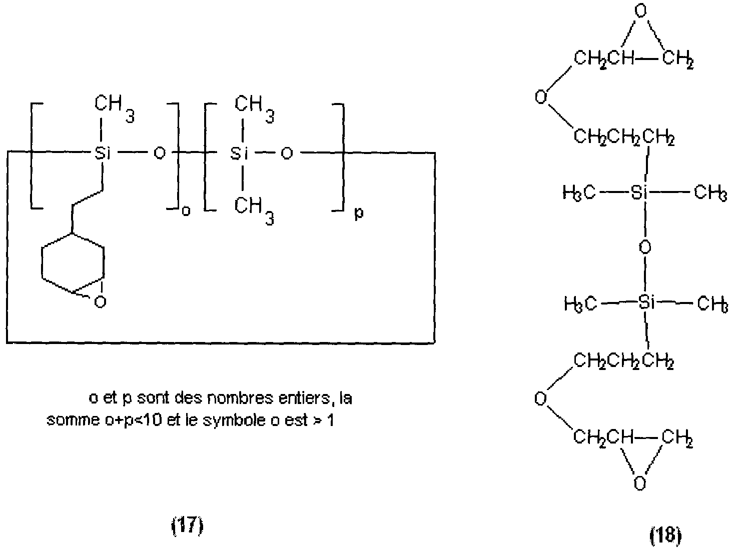 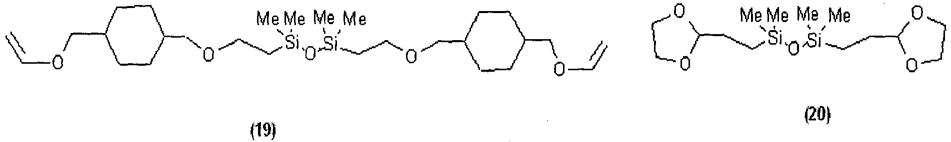 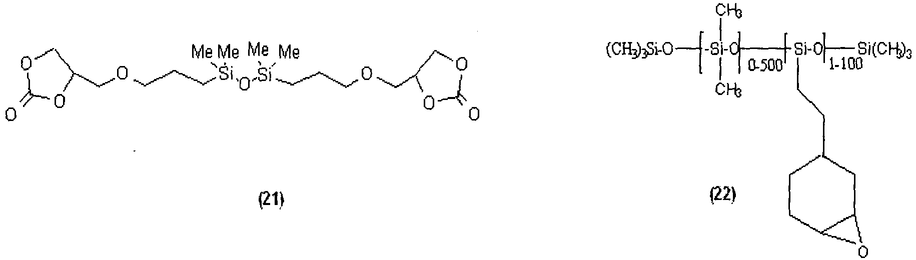 formules dans lesquels les symboles Me signifient un groupement méthyl.

Lorsque le composé organosilicié **D** est un silane, il est de préférence le silane suivant :

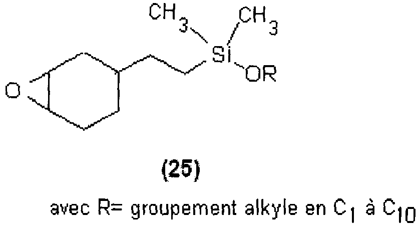

Le monomère, oligomère ou polymère **H** à groupements organofonctionnels d'espèce acrylate possède par exemple des fonctions acrylates époxydés, acrylo-glycéro-polyester, acrylates multifonctionnels, acrylo-uréthanes, acrylo-polyéthers, polyester insaturé, acrylo-polyesters ou acrylo-acryliques.

Ces espèces acryliques, éventuellement en mélange, sont choisies de préférence parmi les espèces suivantes: triacrylate de triméthylolpropane, diacrylate de tripropylèneglycol, glycidylpropyl triacrylate, pentaérythritol triacrylate, triméthylolpropane éthoxylatétriacrylate, Bisphénol-A éthoxylate diacrylate, tripropylèneglycol diacrylate, triéthylèneglycol diacrylate, tétraéthylèneglycoldiacrylate, polyéthers acrylates, polyesters acrylates (par exemple le produit Ebecryl 810 de la société Cytec), et époxy acrylates (par exemple le produit Ebecryl^{®} 600 de la société Cytec).

Il est rappelé que, dans le présent mémoire, l'expression "acrylique" englobe des composés comprenant la fonction de type CH₂=CH-(CO)-O- ou de type CH₂=C(CH₃)-(CO)-O-.

Le photosensibilisateur **E** est choisi parmi les molécules qui absorbent des longueurs d'ondes différentes de celles absorbées par le photoamorceur afin de permettent ainsi d'étendre leur sensibilité spectrale. Son mode d'action est plus communément connu sous l'expression « photosensibilisation » qui consiste en un transfert d'énergie du photosensibilisateur excité vers le photoamorceur. Ainsi le photosensibilisateur augmente la fraction de lumière absorbée par l'amorceur et donc le rendement en photolyse. Ainsi, une plus grande quantité d'espèces réactives est générée et par conséquent la polymérisation est plus rapide. Il existe un grand nombre de photosensibilisateurs bien connus de l'homme du métier. De préférence, le choix du photosensibilisateur se fera en fonction des critères suivants :
- L'énergie de son état excité est supérieure à celle du photoamorceur,
- son spectre d'absorption est dans une région où les charges et les pigments n'absorbent pas, et
- il est inerte chimiquement.

Comme exemple de photosensibilisateurs **E,** on peut citer : l'anthracène, le pyrène, la phénothiazine, la cétone de Michler, les xanthones, les thioxanthones, la benzophénone, l'acétophénone, les dérivés du carbazole, la fluorénone, l'anthraquinone, la camphorquinone ou les oxydes d'acylphosphine.

En particulier, le photosensibilisateur **E** peut aussi être choisi :
- parmi les diéther-anthracènes de formules suivantes : 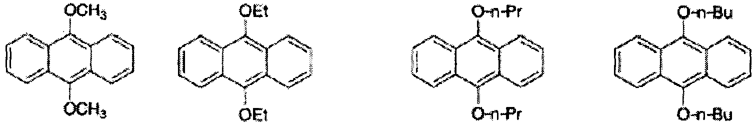 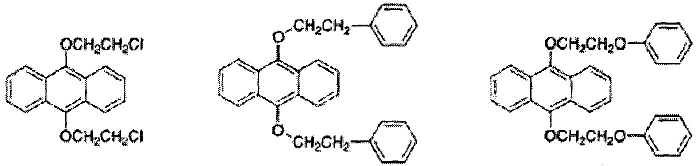 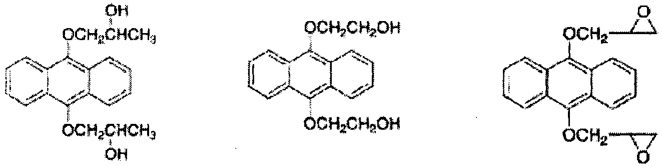 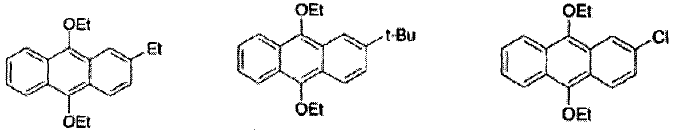 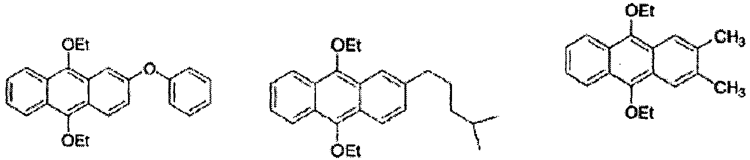
- parmi les diéther-naphtalènes de formules suivantes : 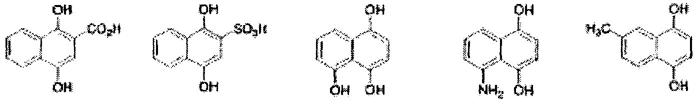 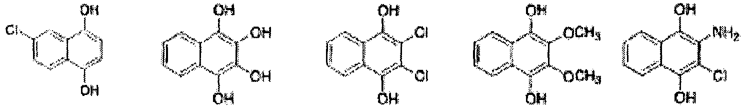 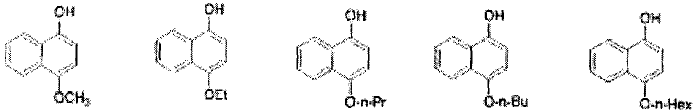 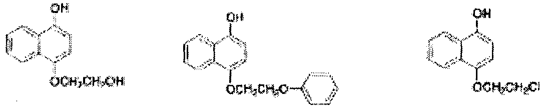 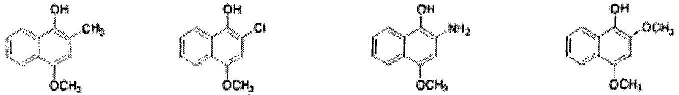 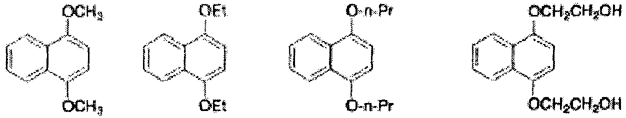 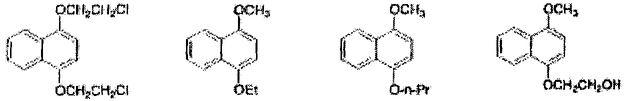 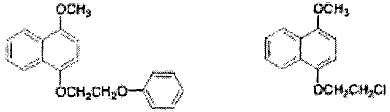 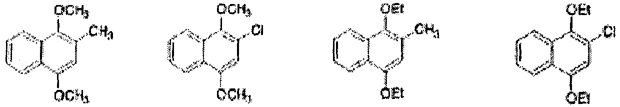
- ou parmi les diéther-benzènes de formules suivantes :

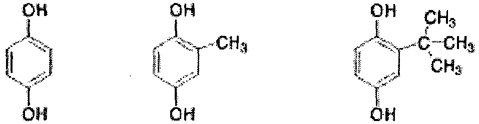

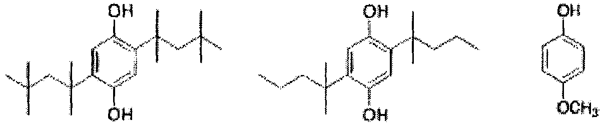

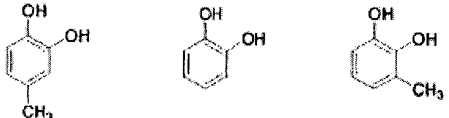

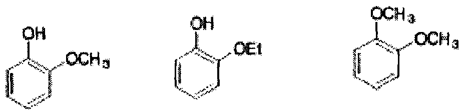

Ces photosensibilisateurs sont décrits notamment dans le document WO-A-2006/073021. On peut aussi citer les photosensibilisateurs hydrocarbonés aromatiques à un ou plusieurs noyaux aromatiques substitués ou non, ayant une absorption résiduelle de la lumière comprise entre 200 et 500 nm tels que ceux de formules (IV) à (XI) et (XIII) à (XXII) décrites de la page 8 à 15 du document WO-A-00/19966 ou bien encore à au moins l'une des benzophénones décrites page 4 ligne 33 à page 7 ligne 12, et page 8 ligne 9 ligne 13 du document WO-A-99/05181. A titre d'exemple, on peut citer les composés suivants :

| | |
|---|---|
| 4,4'diméthoxybenzoïne ; | phénanthrènequinone ; |
| 2-éthylanthraquinone ; | 2-méthylanthraquinone ; |
| 1,8-dihydroxyanthraquinone ; | dibenzoylpéroxyde ; |
| 2,2-diméthoxy-2-phénylacétophénone ; | benzoïne ; |
| 2-hydroxy-2méthylpropiophénone ; | benzaldéhyde ; |
| 4-(2-hydroxyéthoxy)phényl-(2-hydroxy-2-méthylpropyl) cétone ; | |
| benzoylacétone; | 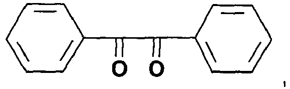 |
| 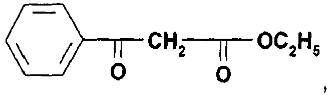 | |
| 2-isopropylthioxanthone | 1-chloro-4-propoxythioxanthone |
| 4-isopropylthioxanthone la camphorquinone | 2-4 diéthyl thioxanthone et leur mélange. |

D'autres photosensibilisateurs sont utilisables. Notamment, on peut utiliser les photosensibilisateurs décrits dans les documents US 4,939,069; US 4,278,751 et US 4,147,552.

On peut aussi citer les photosensibilisateurs cités dans la demande de brevet WO-2005 070989 tels que:
- dans la famille des thioxanthones: thioxanthone, 2-isopropylthioxanthone, 2-chlorothioxanthone, 2-dodécylthio- xanthone, 2, 4-diéthylthioxanthone, 2, 4-diméthylthioxanthone, 1-méthoxycarbonylthioxanth- one, 2-éthoxycarbonylthioxanthone, 3- (2-méthoxyéthoxycarbonyl)-thioxanthone, 4-butoxy- carbonylthioxanthone, 3-butoxycarbonyl-7-méthylthioxanthone, 1-chloro-4-propoxy-thio- xanthone, 1-cyano-3-chlorothioxanthone, 1-éthoxycarbonyl-3-chlorothioxanthone, 1-éthoxycarbonyl-3-éthoxythioxanthone, 1-éthoxycarbonyl-3-aminothioxanthone, 1-éthoxy-carbonyl- 3-phénylsulfurylthioxanthone, 3, 4-di [2-(2-méthoxyéthoxy) éthoxycarbonyl] thiox-anthone, 1-éthoxycarbonyl-3- (1-méthyl-1-morpholinoéthyl)-thioxanthone, 2-méthyl-6-di-méthoxyméthylthioxanthone, 2-méthyl-6- (1,1-diméthoxybenzyl)-thioxanthone, 2-morpholinométhylthioxanthone, 2-méthyl-6-morpholinométhylthioxanthone, N-allylthioxanthone-3,4-dicarboximide, N-octylthioxanthone-3, 4-dicarboximide, N- (1,1,3, 3-tétraméthylbutyl)-thioxanthone-3, 4-dicarboximide, 1-phénoxythioxanthone, 6-éthoxycarbonyl-2-méthoxythioxanthone, 6-éthoxy-carbonyl-2-méthylthioxanthone, 1, 3-diméthyl-2-hydroxy-9H-thiox-anthen-9-one-2-éthylhexyl éther, thioxanthone-2-polyéthylene glycol ester, chlorure de 2-hydroxy-3- (3, 4-diméthyl-9-oxo-9H-thio-xanthon-2-yloxy)-N, N, N-triméthyl-1-propanaminium ;
- dans la famille des benzophénones: benzophénone, 4-phénylbenzophénone, 4-méthoxybenzophénone, 4,4'- dimethoxy-benzophénone, 4,4'-diméthylbenzophénone, 4, 4'-dichlorobenzophénone, 4,4'-di-méthyl-aminobenzophénone, 4,4'-diéthylaminobenzophénone, 4-méthylbenzophénone, 2,4,6-triméthylbenzophénone, 4-(4-méthylthiophényl)-benzophenone, 3,3'-diméthyl-4-méth-oxybenzophénone, méthyl-2-benzoyl benzoate, 4-(2-hydroxyéthylthio)-benzophénone, 4-(4- tolylthio)benzophénone, chlorure de 4-benzoyl-N,N,N-triméthylbenzèneméthanaminium, chlorure de 2-hydroxy-3-(4-benzoylphénoxy)-N,N,N-triméthyl-1-propanaminium monohydrate, 4-(13-acryloyl-1, 4,7,10,13-pentaoxatridécyl)-benzophénone, chlorure de 4-benzoyl-N,N-diméthyl-N-[2-(1-oxo-2-propényl)oxy]éthylbenzèneméthanaminium;
- dans la famille des 3-acylcoumarins : 3-benzoylcoumarin, 3-benzoyl-7-méthoxycoumarin, 3-benzoyl-5,7-di(prop-oxy)coumarin, 3-benzoyl-6,8-dichlorocoumarin, 3-benzoyl-6-chlorocoumarin, 3,3'-carbonyl- bis[5,7-di-(propoxy) coumarin], 3,3'-carbonyl-bis(7-méthoxycoumarin), 3,3'-carbonyl-bis (7-di-éthyl-aminocoumarin), 3-isobutyroylcoumarin, 3-benzoyl-5,7-diméthoxycoumarin, 3-benzoyl-5,7-diéthoxycoumarin, 3-benzoyl-5,7-dibutoxy-coumarin, 3-benzoyl-5,7-di (méthoxyéthoxy) -coumarin, 3-benzoyl-5,7-di(allyloxy)coumarin, 3-benzoyl-7-diméthylaminocoumarin, 3-benzo-yl-7-diéthylaminocoumarin, 3-isobutyroyl-7-diméthylaminocoumarin, 5,7-diméthoxy-3- (1-naphthoyl)coumarin, 5,7-diméthoxy-3-(1-naphthoyl)coumarin, 3-benzoylbenzo- [f]-coumarin, 7-diéthylamino-3-thiénoylcoumarin, 3-(4-cyanobenzoyl)-5,7-diméthoxycoumarin;
- dans la famille des 3-(aroylméthylène)-thiazolines : 3-méthyl-2-benzoylméthylène-5-naphthothiazoline, 3-méthyl-2-benzoylméthylène-benzo-thiazoline, 3-éthyl-2-propionylméthylène-p-naphthothiazoline ;
- ou dans la famille des cétones: acétophénone, 3-éthoxyacétophénone, 4-phénylacétophen-one, benzyl-2-acétyl-naphthalène, 2-naphthaldéhide, 9,10-anthraquinone, 9-fluorenone, di-benzosubérone, xanthone, 2,5-bis(4-diéthylaminobenzylidene)cyclopentanone, α-(para-di-méthyl-aminobenzylidène) cétones, tels que 2-(4-diméthylaminobenzylidene)-indan-1-one ou 3-(4-diméthylamino-phényl)-1-indan-5-yl-propénone, 2-benzoyl-3- (4-diméthylaminophényl)-2- propène-nitrile, 3-phénylthiophthalimide, N-méthyl-3, 5-di(éthylthio) phthalimide et N-méthyl-3,5-di(éthylthio)phthalimide.

D'autres exemples de photosensibilisateur sont décrits dans le brevet U. S. n° 6,025, 406. Le photosensibilisateur lorsqu'il est présent dans la composition est ajouté à hauteur de 0,05 à 10% en poids par rapport au poids total de la composition à polymériser/réticuler et de préférence entre 0,1 et 2% en poids par rapport au poid total de la composition à polymériser/réticuler.

Comme exemple d'additif **Q,** on peut citer des modulateurs d'adhérence (résines ou polymères linéaires silicones portant des fonctions vinyle, époxy, vinyléther, hydroxyle,...), des pigments, des charges minérales telles que notamment des fibres synthétiques (polymères) ou naturelles broyées, du carbonate de calcium, du talc, de l'argile, du dioxyde de titane, de la silice de précipitation ou de combustion; de colorants solubles; d'inhibiteurs d'oxydation et de corrosion ; d'agents fongicides, bactéricides, anti-microbiens ; et/ou de tout autre matériau n'interférant pas avec l'activité catalytique de l'amorceur et n'absorbant pas dans la gamme de longueur d'onde choisie pour la photoactivation.

La composition **R** polymérisable et/ou réticulable par voie cationique est utilisable telle quelle ou en solution dans un solvant organique **F.** Elle est utile en couche mince dans le domaine des revêtements anti-adhérents sur les matériaux cellulosiques, les peintures, ainsi qu'en couche épaisse pour l'encapsulation de composants électriques et électroniques, les revêtements pour textiles, ainsi que pour le gainage de fibres optiques. Elle est tout particulièrement intéressante lorsqu'elle est utilisée telle quelle pour rendre non adhérent un matériau, tel que des feuilles métalliques, du verre, des matières plastiques ou du papier, à d'autres matériaux auquels il adhérerait normalement. La composition selon l'invention présente avantageusement une viscosité ne dépassant pas 5 000 mPa.s, de préférence ne dépassant pas 4 000 mPa.s à 25°C.

L'invention vise donc également un procédé pour rendre des articles non adhérents à des surfaces auxquelles ils adhéreraient normalement, caractérisé en ce qu'on applique entre 0,1 et 5 g par m² de surface dudit l'article à enduire de la composition **R** selon l'invention et telle que décrite ci-dessus et on réticule ladite composition par apport d'énergie dont au moins une partie ou la totalité est fournie par voie photochimique ou par faisceau d'électrons.

La surface de l'article peut subir un pré-traitement de surface de type Corona ou Plasma. Ce traitement connu de l'homme du métier consiste en une très forte oxydation de la surface du matériau par application d'une décharge électrique à haute fréquence sur la surface à traiter entrainant une augmentation de la tension de surface et améliorant ainsi sa mouillabilité.

Selon un mode de réalisation particulier, l'opération de réticulation est réalisée par un rayonnement U.V. de longueur d'onde de l'ordre de 200 à 400 namomètres. La durée d'irradiation peut être courte et elle est généralement inférieure à 1 seconde et est de l'ordre de quelques centièmes de seconde pour les faibles épaisseurs de revêtement. La réticulation obtenue est excellente même en l'absence de tout chauffage. Bien entendu un chauffage entre 25 et 200°C n'est pas exclu de l'invention. Bien entendu, on peut régler le temps de durcissement notamment, par le nombre de lampes U.V. utilisées, par la durée d'exposition aux U.V. et par la distance entre la composition et la lampe U.V. Les compositions **R** selon l'invention et sans solvant, c'est-à-dire non diluées, sont appliquées à l'aide de dispositifs aptes à déposer, d'une façon uniforme, de faibles quantités de liquides. On peut utiliser à cet effet par exemple le dispositif nommé "Helio glissant" comportant en particulier deux cylindres superposés: le rôle du cylindre placé le plus bas, plongeant dans le bac d'enduction où se trouve la composition, est d'imprégner en une couche très mince le cylindre placé le plus haut. Le rôle de ce dernier est alors de déposer sur le support, par exemple un support papier, les quantités désirées de composition dont il est imprégné. Un tel dosage est obtenu par règlage de la vitesse respective des deux cylindres qui tournent en sens inverse l'un de l'autre.

Les quantités de compositions déposées sur les supports sont variables et s'échelonnent le plus souvent entre 0,1 et 5 g/m² de surface traitée. Ces quantités dépendent de la nature des supports et des propriétés antiadhérentes recherchées. Elles sont plus souvent comprises entre 0,5 et 1,5 g/m² pour des supports non poreux.

La composition **R** polymérisable et/ou réticulable par voie cationique de l'invention peut également être utilisée en couche plus épaisse (> 5 micromètres), comme vernis de tropicalisation ("comformal coating"), vernis dont le rôle est d'isoler électriquement les composants et les circuits d'un assemblage, ainsi que de les maintenir à l'abri de l'environnement extérieur et des facteurs mécaniques pouvant compromettre la performance de l'ensemble. Ladite composition peut alors être appliquée par pulvérisation ou par trempage, ou encore par brossage; les épaisseurs des revêtements ainsi formés dépendent du mode d'application choisi et varient le plus souvent de 5 micromètres à quelques dixièmes de millimètre; une étape de polymérisation ultérieure peut dans certains cas être nécessaire; celle-ci peut être accomplie par un traitement thermique.

La présente invention a également pour objet un film ou revêtement obtenu à partir de la réticulation de la composition **R** selon l'invention et telle que définie ci-dessus par voie thermique ou actinique.

Un autre objet de l'invention consiste en un article dont une surface au moins est revêtue d'un film ou d'un revêtement obtenu selon le procédé selon l'invention et tel que défini di-dessus. Il s'agira par exemple d'articles (feuilles par exemple) constitués d'un matériau solide (métal, verre, matière plastique, papier ...) dont une surface au moins est revêtue de la composition **R** ci-dessus décrite et réticulée par voie thermique ou actinique.

Enfin, le dernier objet de l'invention consiste en un support ou objet dont une surface au moins est revêtue d'un film ou d'un revêtement selon l'invention et tel que défini ci-dessus.

Les exemples suivants sont donnés à titre illustratif. Ils permettront notamment de mieux comprendre l'invention, de faire ressortir tous ses avantages et d'entrevoir quelques unes de ses variantes de réalisation.

### EXEMPLES

### 1) Synthèse du photoamorceur [(C₁₂H₂₅)-Ph-I-Ph(C₁₂H₂₅)]⁺ : ⁻B[C₆F₅]₄ et préparation d'une composition utile comme photoamorceur cationique selon l'invention

Dans un ballon de 1 litre équipé d'une agitation mécanique, d'un réfrigérant à eau et d'une ampoule de coulée, on charge le dodécylbenzène (100 g; 0,45mole), l'iodate de potassium (43,5g ;0,203 mole), l'acide acétique (199,6g) et l'anhydride acétique (59,5g). Le mélange est agité et refroidi dans un bain de glace à 0°C. On charge un mélange d'acide sulfurique (59,8g) et d'acide acétique (39,86g) dans l'ampoule de coulée. on ajoute en 25 minutes ce mélange à la masse réactionnelle. On laisse ensuite revenir le mélange à température ambiante (20°C), puis on laisse 18 heures sous agitation à température ambiante. On ajoute ensuite de l'eau (750ml) puis on extrait la masse réactionnelle par trois fractions d'éther (3x350ml). Les phases éthérées sont rassemblées puis évaporées sous pression réduite. Le concentrat est repris par une solution saturée de chlorure de sodium (540ml), puis le mélange est refroidi dans un bain de glace pendant deux heures. On récupère le produit par filtration sur verre fritté n°4. Le solide est ensuite recristallisé deux fois dans l'acétone et on récupère le chlorure de bisdodécylphényliodonium par filtration. On prélève 13,05g du composé précédent et 14,36g de tétrakis(pentafluorobenzene)borate de potassium et 160g de méthanol et on agite une demi-heure à température ambiante à l'abri de la lumière. On laisse 12 heures au repos et on filtre puis on dévolatilise à 60°C sous 0,8bar.
Le produit **A1** obtenu est une huile soit 25,8g. Ce photoamorceur est ensuite mis en mélange dans un alcool de Guerbet pour obtenir une composition utile comme photoamorceur cationique selon l'invention.

### 2) Synthèse du photoamorceur [(CₙH₂ₙ₊₁)-Ph-I-Ph(CₙH₂ₙ₊₁)]⁺ ;⁻B[C₆F₅]₄ n=10-13 et préparation d'une composition utile comme photoamorceur cationique selon l'invention

Dans un ballon de 1 litre équipé d'une agitation mécanique, d'un réfrigérant à eau et d'une ampoule de coulée, on charge une coupe d'alkyl(C₁₀-C₁₃)benzène (100g) l'iodate de potassium (43,5g ;0,203mole), l'acide acétique (199,6g) et l'anhydride acétique (59,5g). Le mélange est agité et refroidi dans un bain de glace à 0°C. On charge un mélange d'acide sulfurique(59,8g) et d'acide acétique (39,86g) dans l'ampoule de coulée. On ajoute en 25 minutes ce mélange à la masse réactionnelle. On laisse ensuite revenir le mélange à température ambiante, puis on laisse 18 heures sous agitation à température ambiante. On ajoute ensuite 750ml d'eau puis on extrait la masse réactionnelle par trois fractions d'éther (3x350ml). Les phases éthérées sont rassemblées puis évaporées sous pression réduite. Le concentrat est repris par une solution à 10% de sodium tétrakis(pentafluorobenzene)borate (1500ml), puis on laisse réagir à l'abri de la lumière sous agitation lente pendant douze heures. On extrait la masse réactionnelle par trois fractions d'éther (3x350ml)
Les phases éthérées sont rassemblées puis évaporées sous pression réduite.
On obtient le produit **A2** qui est une huile (225,3g).
L'analyse RMN montre une distribution en C₁₀-C₁₃ d'alkyl benzene avec un mélange de trois produits (63%, 20% et 17% en poids) se différenciant par leur partie cationique. Ce photoamorceur est ensuite mis en mélange dans un alcool de Guerbet pour obtenir une composition utile comme photoamorceur cationique selon l'invention.

### 3) Procédé de préparation selon l'invention: Synthèse du photoamorceur [(CₙH₂ₙ₊₁)-Ph-I-Ph(CₙH₂ₙ₊₁)]⁺ ;⁻B[C₆F₅]₄ n=10-13 directement dans un alcool de Guerbet :

Les manipulations (Essais 1, 2 et 3) sont réalisées dans un ballon tricol équipé d'un réfrigérant, d'une ampoule de coulée et d'une sonde thermométrique selon le protocole suivant (les quantités respectives des constituants sont mentionnés dans les Tableaux 1 et 2:
• On charge une quantité d'iodure de bis(C₁₀₋₁₃)alkylphényliodonium puis l'alcool de Guerbet ISOFOL^{®} 20 (Octyldodécanol) suivi d'une agitation mécanique (510 tr/min),
• on chauffe à 65°C et on attend la solubilisation totale de l'iodure de bis(C₁₀-₁₃)alkylphényliodonium,
• on coule la solution aqueuse de tétrakis(pentafluorophényl)borate de sodium,
• on laisse sous agitation durant 4h à 65°C,
• on transfère le mélange dans une ampoule à décanter et après retour à température ambiante (sur une durée de 24h), on sépare les phases,
• la phase organique est lavée 3 fois avec 100g d'eau permutée,
• et on dévolatilise la phase organique: pendant 4h, à 70°C, sous pression réduite à 5mbars de manière à obtenir la composition utile comme photoamrceur cationique selon l'invention.

**Tableau 1: Préparation de compositions utiles comme photoamorceur cationique (20% massique de sel d'iodonium dans l'alcool de Guerbet ISOFOL^{®} 20 - Octyldodécanol)**

| | **Essai 1** | | **Essai 2** | |
|---|---|---|---|---|
| | Masse (g) | Quantité (mol) | Masse (g) | Quantité (mol) |
| Alcool de Guerbet ISOFOL^{®} 20 (Octyldodécanol) | 50,09 | 0,168 | 50,02 | 0,168 |
| iodure de bis(C10-13)alkylphényliodonium | 7,18 | 9,84.10⁻³ | 7,11 | 9,74x10⁻³ |
| Solution aqueuse à 10,4% massique de tétrakis(pentafluorophényl)borate de sodium | 74,5 | 11,04.10⁻³ | - | - |
| Solution aqueuse à 4,6% massique de tetrakis(pentafluorophényl)borate de sodium | - | - | 155,09 | 10,16x10⁻³ |

**Tableau 2: Préparation d'une composition utile comme photoamorceur cationique (50% massique de sel d'iodonium dans l'alcool de Guerbet ISOFOL^{®} 20 - Octyldodécanol).**

| **Essai 3** | | |
|---|---|---|
| | Masse (g) | Quantité (mol) |
| Alcool de Guerbet ISOFOL^{®} 20 (Octyldodécanol) | 15,02 | 0,050 |
| iodure de bis(C10-13)alkylphényliodonium | 7,11 | 9,74x10⁻³ |
| Solution aqueuse à 10,4% massique de tétrakis(pentafluorophényl)borate de sodium | 74,5 | 11,04x10⁻³ |

### 4) Réactivité en masse sous rayonnement ultraviolet :

Des compositions polymérisables et/ou réticulable sont préparées comme détaillé dans le Tableau 4 ci-après avec les composants décrits dans le Tableau 3 suivant :

**Tableau 3 : Structures des différents produits utilisés dans les essais.**

| | Constituants | Structures chimiques |
|---|---|---|
| **A2** | Sel d'iodonium (invention) | 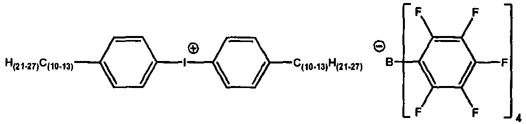 |
| **A-comp** | Sel d'iodonium (comparatif) | 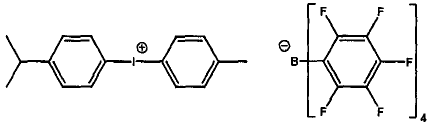 |
| **D1** | Huile polydiméthylsiloxane fonctionnalisée époxy dans la chaîne 2 | 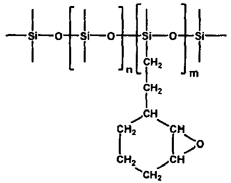 |
| | | avec n=80 et m=7 |
| **D2** | Huile polydiméthylsiloxane fonctionnalisée époxy dans la chaîne 2 | 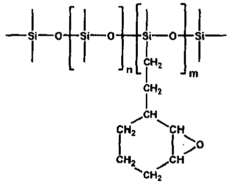 |
| | | avec n=200 et m=2,5 |
| **C** | Huile silicone fonctionnalisée hydroxyl dans la chaîné (comparatif solvant/donneur d'hydrogène) | 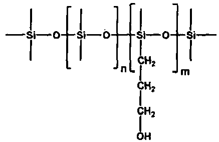 |
| | | avec n=9 et m=4 |
| **F** | Isopropanol (comparatif solvant/donneur d'hydrogène) | CH₃-CH(OH)-CH₃ |
| **I1** | Butyloctanol (Guerbet C₁₂) | 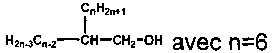 |
| **I2** | Octyldodécanol (Guerbet C₂₀) (invention solvant/donneur d'hydrogène) | 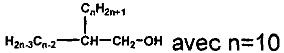 |

Puis, 1,4g de chaque composition est placé dans une cuve de polyméthacrylate de méthyle (PMMA). Une aiguille vibrante (fréquence 100Hz) est plongée dans cette cuve jusqu'à 2mm du fond. La réaction de polymérisation est initiée lorsque le fond de la cuve est soumis à un rayonnement UV par l'intermédiaire d'une fibre optique. La polymérisation avançant, la viscosité du milieu augmente jusqu'à obtenir un gel. Cette augmentation de viscosité induit une résistance à la vibration de l'aiguille. Ceci entraîne une différence de potentiel qui permet de déterminer le temps de gel. Les mélanges effectués mettent en oeuvre une quantité équimolaire de sel d'iodonium **A2** (invention) ou d'un autre sel d'iodonium **A-comp** (comparatif) c'est-à-dire 0,088mmol pour 20g du système à polymériser UV (composés organosiliciés) qui est soit un mélange des composants **D1** et **D2** soit le composant **D1** seul. Ceci permet donc une comparaison directe de l'efficacité des compositions testées comme photoamorceur.

**Tableau 4. Mesure du temps de gels des compositions réticulées sous une lampe UV.**

| | Masse (g) dans la composition | | | | | | Composition en % poids | | | | | puissance de la lampe UV (W/cm2) | Temps de gel (s) |
|---|---|---|---|---|---|---|---|---|---|---|---|---|---|
| n° Essai | A2 (inventi on) (g) | A-comp (g) | D1 (g) | D2 (g) | donneur d'hydrogèn e/ solvant | (g) | A2 | A-comp | D1 | D2 | donneur d'hydrogè -ne /solvant | | |
| 4 | 0,11 | 0 | 19 | 1 | - | 0,00 | 0,56 | 0,00 | 94,46 | 4,97 | 0 | 3,4 | 0,60 |
| 5 | 0 | 0,09 | 19 | 1 | - | 0,00 | 0,00 | 0,45 | 94,58 | 4,98 | 0 | 3,4 | 0,65 |
| 6 | 0,11 | 0 | 19 | 1 | I2 | 0,05 | 0,56 | 0,00 | 94,24 | 4,96 | 0,24 | 3,4 | 0,54 |
| 7 | 0 | 0,09 | 19 | 1 | I2 | 0,05 | 0,00 | 0,45 | 94,24 | 4,96 | 0,24 | 3,4 | sel iodonium insoluble, pas de gel obtenu |
| 8 | 0 | 0,09 | 19 | 1 | F | 0,41 | 0,00 | 0,44 | 92,70 | 4,88 | 1,99 | 3,4 | 0,81 |
| 9 | 0,11 | 0 | 20 | 0 | - | 0,00 | 0,56 | 0,00 | 99,44 | 0,00 | 0 | 7,5 | 0,68 |
| 10 | 0,11 | 0 | 20 | 0 | F | 0,41 | 0,55 | 0,00 | 97,45 | 0,00 | 2,00 | 7,5 | 1,3 |
| 11 | 0,11 | 0 | 20 | 0 | C | 0,48 | 0,55 | 0,00 | 97,11 | 0,00 | 2,34 | 7,5 | 1 |

L'essai n°6 montre que l'utilisation d'une composition photoamorceur selon l'invention contenant 70% en poids de sel d'iodonium **A2** et 30% en poids d'un alcool de Guerbet (**I2**, octyldodécanol) par rapport au poid total de la composition photoamorceur permet d'améliorer très sensiblement la réactivité (temps de gel= 0,54 s) du système. L'amélioration est notable (amélioration de 33%) lorsqu'il est comparé aux résultats obtenus avec le photoamorceur **A-comp** en solution dans l'isopropanol (**F**) (essai n°8, temps de gel= 0,81 s) qui est le système de référence utilisé dans la photoréticulation des compositions silicones.

L'essai n°7, sel d'iodonium A-Comp dans un solvant de Guerbet I2 ne permet pas de durcir (réticuler) le système réactif D1+D2. Le sel d'iodonium A-cComp présentait un problème d'insolubilité dans l'alcool de Guerbet et le système résultant n'était pas actif pour polymériser D1+D2.

### 5) Stabilité des compositions de photoamorceurs mettant en oeuvre les divers solvants

Le Tableau 5 ci-dessous résume les tests de stabilité au vieillissement des compositions photoamorceurs obtenues en mélangeant de 40 à 50% poids massique de photoamorceur **A2** dans différents alcools de Guerbet **(I1** et **I2**). Le vieillissement est accéléré par application d'une température de 60°C pendant 15 jours.

**Tableau 5 : Stabilité au vieillissement des compositions photoamorceurs selon l'invention.**

| N° essai | Solvant | Solution après 1 jour | Solution après 15 jours à 60°C |
|---|---|---|---|
| 12 | **I1** | Clair, liquide | Clair, liquide |
| 13 | **I2** | Clair, liquide | Clair, liquide |

Les essais 12 et 13 montrent que les compositions photoamorceurs selon l'invention restent homogènes et stables au vieillissement.

### 6) Stabilisation de la composition photoamorceur

A une composition photoamorceur contenant 70% massique de sel d'iodonium **A2** et 30% massique d'un alcool de Guerbet en C₂₀ (**I2**) est ajoutée une quantité variable d'un stabilisant (Tinuvin^{®} 292 de la société CIBA qui est un mélange de bis(1,2,2,6,6-pentaméthyl-4-piperidinyl)-sébacate et de 1-(méthyl)-8-(1,2,2,6,6-pipéridinyl)-sébacate). Ces différentes compositions sont stockées à 20, 40 et 60°C. Des mesures de pH (0,175g de la composition de photoamorceur dans 15g d'isopropanol) sont effectuées. Le pH-mètre utilisé (SCHOTT, CG825) est muni d'une électrode de verre (SCHOTT Instruments, N52A) qui est étalonnée avant chaque série de mesure avec des solutions tampons de pH=4 et pH=7. Les valeurs de pH sont notées après 5 minutes de repos des solutions consécutives à une agitation de 3 minutes par barreau aimanté.

**Tableau 6 : Stabilité au vieillissement des compositions photoamorceurs selon l'invention**

| N° Essai | Stabilisant (ppm) | Température de stockage (°C) | pH initial | pH après 1 semaine de stockage | pH après 4 semaines de stockage | pH après 8 semaines de stockage |
|---|---|---|---|---|---|---|
| 14 | 0 | 20 | 5,67 | 5,88 | 6,28 | 5,60 |
| 15 | 0 | 40 | 5,67 | 5,91 | 6,19 | 6,08 |
| 16 | 0 | 60 | 5,67 | 5,81 | 3,21 | 2,83 |
| 17 | 1007 | 20 | 6,35 | 6,08 | 6,24 | 5,87 |
| 18 | 1007 | 40 | 6,35 | 5,90 | 5,97 | 5,64 |
| 19 | 1007 | 60 | 6,35 | 5,61 | 5,36 | 3,58 |
| 20 | 4941 | 20 | 6,89 | 6,52 | 6,44 | 6,14 |
| 21 | 4941 | 40 | 6,89 | 6,19 | 5,96 | 5,80 |
| 22 | 4941 | 60 | 6,89 | 5,75 | 5,25 | 4,53 |

Les essais n°19 et 22 montrent que l'addition d'un stabilisant dans une composition photoamorceur selon l'invention permet de stabiliser le pH lors d'un stockage sur une longue durée. Une valeur de pH trop basse (inférieure à 4) rend la solution inutilisable dans les systèmes cationiques réactifs sous UV.

### 7) Préparation de revêtements anti-adhésifs

Les compositions présentés dans le Tableau 7 (quantités données en partie en poids) suivant sont évaluées par application sur deux supports différents à raison de 1,0 g/m² à une vitesse de 200m/mn par l'intermédiaire d'un système de transfert par rouleaux. La réticulation est effectuée sous une lampe UV (puissance de la lampe 240W/cm, H⁺, Fusion). Avant enduction, le support subit un traitement corona (1000 W). L'accrochage des revêtements évalués par un test de « rub-off » et les « extractibles silicones » sont mesurés. Les résultats sont bons et comparables pour l'ensemble des échantillons (essais 23 à 34). Les forces de décollement d'adhésif de référence TESA^{®} 7475 appliqué 15 minutes après passage sous lampe UV sont mesurés selon les normes Finat 3 et Finat 10 et par vieillissement accéléré de 7 jours à 70°C sous pression de 70g/cm². Ces forces de décollement sont obtenues par pelage à 180° à une vitesse de 330mm/min.

Les mélanges effectués mettent en oeuvre une quantité équimolaire de sels d'iodonium **A2** ou **A-comp** (0,44mmol pour 100g de composés organosilicés réticulables par voie cationique = mélange D1+D2) et permettent donc une comparaison directe des compositions de photoamorceurs.

**Tableau 7 : Propriétés anti-adhésives.**

| | | Silicones réactifs | | Sels d'iodonium | | Donneurs d'hydrogène/solvants | | | Forces de décollement d'adhésif (réf. référence TESA^{®} 7475) | | |
|---|---|---|---|---|---|---|---|---|---|---|---|
| N° essai | Type de Support | D1 p/p | D2 p/p | A2 p/p | A-comp p/p | I2 Guerbet en C₂₀ p/p | F Isopropanol Comparatif p/p | I1 Guerbet en C₁₂ p/p | Norme FINAT-3 20h @25°C (cN/cm) | Norme FINAT-10 20h @70°C (cN/cm) | 7j @70°C (cN/cm) |
| 23 | PET | 95 | 5 | 0,574 | | | | | 2,2 | 8,3 | 19,3 |
| 24 | PET | 95 | 5 | 0,574 | | 1,25 | | | 1,9 | 5,8 | 14,6 |
| 25 | PET | 95 | 5 | 0,574 | | 3,25 | | | 2,1 | 7,9 | 20,9 |
| 26 | PET | 95 | 5 | | 0,45 | | 2,05 | | 2,3 | 7,2 | 16,6 |
| 27 | PET | 95 | 5 | | 0,45 | 1,245 | 2,05 | | 2,2 | 6,4 | 16,2 |
| 28 | PET | 95 | 5 | | 0,45 | 3,25 | 2,05 | | 2,5 | 6,9 | 17,6 |
| 29 | PP | 95 | 5 | | 0,45 | | 2,05 | | 2,6 | 4,1 | 7 |
| 30 | PP | 95 | 5 | 0,6 | | | | 0,255 | 2,5 | 4,7 | 8,8 |
| 31 | PP | 95 | 5 | 0,6 | | | | 1,4 | 2,4 | 3,7 | 6,2 |
| 32 | PP | 95 | 5 | 0,6 | | 0,255 | | | 2,7 | 4,7 | 6,9 |
| 33 | PP | 95 | 5 | 0,6 | | 1.4 | | | 2,6 | 4,1 | 6,9 |
| 34* | PP | 95 | 5 | 0,6 | | 0,255 | | | 2,6 | 4,7 | 8,4 |

Les quantités sont données en parties en poids (p/p). Les composants D1, D2, A2, A-comp, I2, I1 et F sont décrits dans le Tableau 3
PET = support en polyéthylène téréphtalate 6040 de Toray en 30µm.
PP = support en polypropylène CR30 d'UCB en 30µm.
* La composition de photoamorceur utilisée pour l'essai 34 contient 1000ppm de stabilisant Tinuvin^{®} 292.

Les essais montrent que les compositions photoamorceurs selon l'invention permettent d'obtenir de bonnes valeurs de décollement d'adhésif (« release ») et sont exploitables sur un plan industriell.

### 8) Impact sur l'odeur du produit final et lors de l'enduction.

De nombreuses enductions présentées ci-dessus ont été évaluée selon la méthode suivante: 0,5m² de support sont récupérés en sortie de machine, immédiatement après enduction et insolation par les lampes UV. Cet échantillon est placé dans un confiturier propre de 1 litre et hermétiquement fermé. Après 24, un panel de quatre personnes évalue en aveugle l'intensité de l'odeur perçue dans ce confiturier.

Les enductions ont été réalisées comme présenté ci-dessus. Suivant les essais le support à fait l'objet ou non d'un traitement corona (1000 W) avant enduction de la composition. Les notes de 0 à 5 données par les expérimentateurs sont additionnées. Ainsi, la valeur la plus faible correspond à l'odeur la moins prononcée et inversement pour la note la plus élevée.

**Tableau 8 : Evaluation de l'odeur des revêtements.**

| | | | Silicones réactifs | | Sels d'iodonium | | Donneurs d'hydrogène/solvants | | | |
|---|---|---|---|---|---|---|---|---|---|---|
| N° essai | Support | Traitement Corona | D1 | D2 | A2 | A-comp | I2 | F | I1 | Evaluation de l'odeur |
| 35 (Inv.) | PP | Non | 95 | 5 | 0,6 | - | - | - | - | 12 |
| 36 (Inv.) | PP | Non | 95 | 5 | 0,6 | - | 0,25 | - | - | 12 |
| 37 (Inv.) | PP | Non | 95 | 5 | 0,6 | - | 1,4 | - | - | 4 |
| 38 (Comp.) | PP | Non | 95 | 5 | - | 0,45 | - | 2,05 | - | 17 |
| 39 (Comp.) | PP | Oui | 95 | 5 | - | 0,45 | - | 2,05 | - | 16 |
| 40 (Inv.) | PP | Oui | 95 | 5 | 0,6 | - | - | - | 0,255 | 10 |
| 41 (Inv.) | PP | Oui | 95 | 5 | 0,6 | - | - | - | 1,4 | 10 |
| 42 (Inv.) | PP | Oui | 95 | 5 | 0,6 | - | 0,26 | - | - | 11 |
| 43 (Inv.) | PP | Oui | 95 | 5 | 0,6 | - | 1,4 | - | - | 7 |
| 44 (Inv.) | PP | Oui | 95 | 5 | 0,6 | - | 0,26 | - | - | 11 |

Les quantités sont données en parties en poids. Les composants D1, D2, A2, A-comp, I2, I1 et F sont tels que décrits dans le Tableau 3.

Les essais selon l'invention (Inv.) présentent une plus faible odeur que les essais comparatifs n°38 et 39 qui mettent en oeuvre le photoamorceur **A-Comp** dans l'isopropanol, qui un sel d'iodonium largement utilisé dans l'industrie du revêtement par la voie cationique. On remarque aussi que les meilleurs résultats (essais 37 et 43) ont été obtenu lorsque que la composition photoamorceur selon l'invention contient 30% en poids du sel d'iodonium **A2** et 70% en poids de solvant de Guerbet **I2.**

De plus, les compositions selon l'invention ne présentent pas de risques liés aux points éclairs : I1 (point éclair= 120°C) et 12 (point éclair= 180°C), alors que pour l'isopropanol (point éclair=35°C).

## Revendications

1. Composition **P** comprenant :
1) au moins un sel d'iodonium **A** de formule **(I)'** suivante: 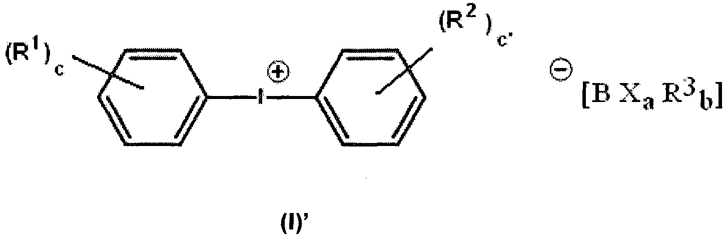 dans laquelle :
- les symboles R¹ et R² sont identiques ou différents, et représentent chacun un radical alkyle linéaire ou ramifié ayant de 10 à 30 atomes de carbone et de préférence de 10 à 20 atomes de carbone, encore plus préférentiellement de 10 à 15 atomes de carbone, encore plus préférentiellement de 10 à 13 atomes de carbone et encore plus préférentiellement 12 atomes de carbone,
- a et b sont des nombres entiers tels que 0 ≤ a ≤ 3, 1 ≤ b ≤ 4 et a + b = 4,
- c et c' sont des nombres entiers, identiques ou différents, allant de 1 à 5 et de préférence c et c' sont égal à 1,
- les symboles X, identiques ou différents, représentent :
• un atome de chlore ou de fluor avec 0 ≤ a ≤ 3, ou
• une fonction OH avec 0 ≤ a ≤ 2, et
- les symboles R³, identiques ou différents, représentent:
• un radical phényle substitué par :
- au moins 2 atomes d'halogène, et de préférence par au moins 2 atomes de fluor, ou
- au moins un groupement électroattracteur choisi parmi le groupe constitué par: -CF₃, -OCF₃, -NO₂, -CN, -SO₂-CₙF₂ₙ₊,
- (CO)- CₙF₂ₙ₊₁, -O-CₙF₂ₙ₊₁ et -CₙF₂ₙ₊₁, avec n étant un nombre entier de 1 à 20, ou
• un radical aryle contenant au moins deux noyaux aromatiques tel que biphényle, naphtyle, éventuellement substitué par au moins un atome d'halogène, notamment un atome de fluor ou un groupement électroattracteur tel que : -CF₃, -OCF₃, -NO₂, -CN, -SO₂-CₙF₂ₙ₊, -(CO)-CₙF₂ₙ₊₁, -O-CₙF₂ₙ₊₁ et CₙF₂ₙ₊₁, avec n étant un nombre entier de 1 à 20,
2) au moins un donneur d'hydrogène **B** choisi parmi le groupe constitué par les alcools de Guerbet de formule **(II)** suivante:
R⁴ -CH(CH₂OH) - R⁵ **(II)**
dans laquelle :
- les symboles R⁴ et R⁵ sont identiques ou différents, et représentent chacun un radical alkyle ayant de 4 à 12 atomes de carbone, et
- avec la condition supplémentaire que le nombre total d'atomes de carbone dudit alcool de Guerbet est de 10 à 20 atomes de carbone, et
3) éventuellement au moins un stabilisant thermique **C.**

2. Composition **P** selon la revendication 1 comprenant :
1) au moins un sel d'iodonium **A** de formule **(I)** suivante: 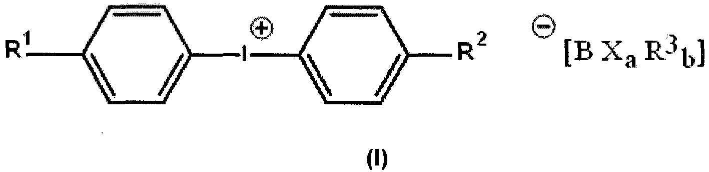 dans laquelle :
- les symboles R¹ et R² sont identiques ou différents, et représentent chacun un radical alkyle linéaire ou ramifié ayant de 10 à 30 atomes de carbone et de préférence de 10 à 20 atomes de carbone, encore plus préférentiellement de 10 à 15 atomes de carbone, encore plus préférentiellement de 10 à 13 atomes de carbone et encore plus préférentiellement 12 atomes de carbone,
- a et b sont des nombres entiers tels que 0 ≤ a ≤ 3, 1 ≤ b ≤ 4 et a + b = 4,
- les symboles X, identiques ou différents, représentent :
• un atome de chlore ou de fluor avec 0 ≤ a ≤ 3, ou
• une fonction OH avec 0 ≤ a ≤ 2, et
- les symboles R³, identiques ou différents, représentent:
• un radical phényle substitué par :
- au moins 2 atomes d'halogène, et de préférence par au moins 2 atomes de fluor, ou
- au moins un groupement électroattracteur choisi parmi le groupe constitué par: -CF₃, -OCF₃, -NO₂, -CN, -SO₂-CₙF₂ₙ₊,
- (CO)- CₙF₂ₙ₊₁, -O-CₙF₂ₙ₊₁ et -CₙF₂ₙ₊₁, avec n étant un nombre entier de 1 à 20, ou
• un radical aryle contenant au moins deux noyaux aromatiques tel que biphényle, naphtyle, éventuellement substitué par au moins un atome d'halogène, notamment un atome de fluor ou un groupement électroattracteur tel que : -CF₃, -OCF₃, -NO₂, -CN, -SO₂-CₙF₂ₙ₊, -(CO)-CₙF₂ₙ₊₁, -O-CₙF₂ₙ₊₁ et CₙF₂ₙ₊₁, avec n étant un nombre entier de 1 à 20,
2) au moins un donneur d'hydrogène **B** choisi parmi le groupe constitué par les alcools de Guerbet de formule **(II)** suivante:
R⁴ -CH(CH₂OH) - R⁵ **(II)**
dans laquelle :
- les symboles R⁴ et R⁵ sont identiques ou différents, et représentent chacun un radical alkyle ayant de 4 à 12 atomes de carbone, et
- avec la condition supplémentaire que le nombre total d'atomes de carbone dudit alcool de Guerbet est de 10 à 20 atomes de carbone, et
3) éventuellement au moins un stabilisant thermique **C.**

3. Composition **P** selon l'une quelconque des revendications précédentes dans laquelle l'anion du sel d'iodonium **A** est choisi parmi le groupe constitué par les anions suivants: [B(C₆F₅)₄]⁻, [B (C₆H₃(CF₃)₂)₄], [B (C₆H₄OCF₃)₄]⁻, [B (C₆H₄CF₃)₄]⁻, [(C₆F₅)₂ B F₂]⁻, [C₆F₅ B F₃]⁻ et [B (C₆H₃F₂)₄]⁻ et de préférence dans le sous-groupe constitué par les anions suivants : B(C₆F₅)₄⁻ et [B (C₆H₃(CF₃)₂)₄]⁻.

4. Composition **P** selon la revendication 1 ou 2 dans lequel le donneur d'hydrogène **B** est un alcool de Guerbet qui a pour formule suivante : 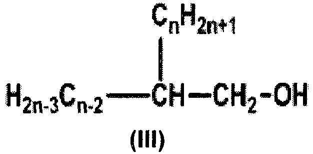 dans laquelle le symbole n est un nombre entier de 6 à 10.

5. Composition **P** selon la revendication 1, 2 ou 4 dans laquelle le donneur d'hydrogène **B** est choisi parmi le groupe constitué par les alcools de Guerbet suivants : 2-butyl-1-octanol, 2-pentyl-1-nonanol, 2-hexyldécan-1-ol, 2-octyldecan-1-ol, 2-octyldodecan-1-ol et leurs mélanges.

6. Composition **P** selon la revendication 1 ou 2 comprenant :
a) 1 à 95 parties en poids, de préférence de 20 à 80 parties en poids par rapport au poids total de la composition **P** du ou des sel(s) d'iodonium **A ,**
b) 5 à 99 parties en poids, de préférence de 20 à 80 parties en poids par rapport au poids total de la composition **P** d'au moins donneur d'hydrogène **B**, et
c) 0 à 5 parties en poids par rapport au poids total de la composition **P** d'au moins un stabilisant thermique **C.**

7. Composition **P** selon la revendication 1, 2 ou 6 dans laquelle le stabilisant thermique **C** est choisi parmi le groupe constitué par: une amine, un composé dont la structure chimique comprend un groupement stériquement encombré et une fonction nitroxyle, un composé dont la structure chimique comprend un groupement stériquement encombré et une fonction phénol, un composé organique phosphoré et leurs combinaisons.

8. Composition **P** selon la revendication 1, 2 ou 6 dans laquelle le sel d'iodonium **A** a la formule **(IV)** suivante: 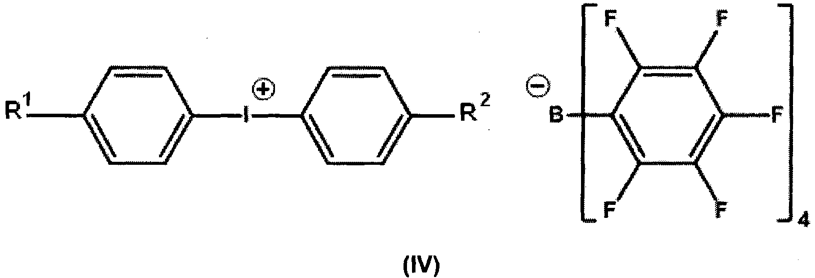 dans laquelle :
- les symboles R¹ et R² sont identiques ou différents, et représentent chacun un radical alkyle linéaire ou ramifié ayant de 10 à 30 atomes de carbone et de préférence de 10 à 20 atomes de carbone et encore plus préférentiellement de 10 à 15 atomes de carbone.

9. Composition **P** selon la revendication 1, 2 ou 8 dans laquelle les symboles R¹ et R² sont identiques ou différents, et représentent chacun un radical alkyle choisi parmi le groupe constitué par les radicaux suivants: 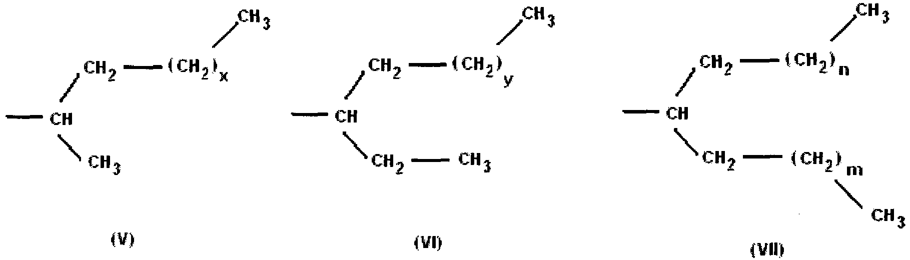 avec :
- x est nombre entier allant de 6 à 16 et de préférence de 6 à 11,
- y est nombre entier allant de 5 à 15 et de préférence de 5 à 10, et
- n et m sont des nombres entiers identiques ou différents et dont la somme n+m est comprise entre 5 et 15 bornes incluses.

10. Utilisation de la composition **P** telle que définie selon l'une quelconque des revendications précédentes comme photoamorceur cationique.

11. Procédé de préparation de la composition **P** telle que définie selon l'une quelconque des revendications 1 à 9 comprenant les étapes suivantes:
a) on prépare des sels précurseurs de formule **(VIII)'** et **(IX)'** suivantes: 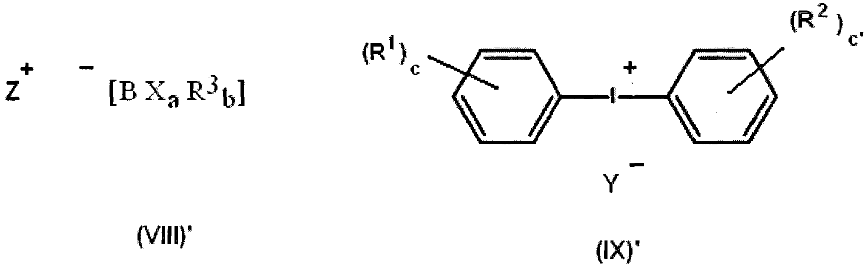 formules dans lesquelles :
- les symboles R¹ et R² sont identiques ou différents, et représentent chacun un radical alkyle linéaire ou ramifié ayant de 10 à 30 atomes de carbone et de préférence de 10 à 20 atomes de carbone et encore plus préférentiellement de 10 à 15 atomes de carbone,
- a et b sont des nombres entiers tels que 0 ≤ a ≤ 3, 1 ≤ b ≤ 4 et a + b = 4,
- c et c' sont des nombres entiers, identiques ou différents, allant de 1 à 5 et de préférence c et c' sont égal à 1
- les symboles X, identiques ou différents, représentent :
- un atome de chlore ou de fluor avec 0 ≤ a ≤ 3, ou
- une fonction OH avec 0 ≤ a ≤ 2, et
- les symboles R³, identiques ou différents, représentent:
- un radical phényle substitué par :
- au moins 2 atomes d'halogène, et de préférence par au moins 2 atomes de fluor, ou
- au moins un groupement électroattracteur choisi parmi le groupe constitué par: -CF₃, -OCF₃, -NO₂, -CN, -SO₂-CₙF₂ₙ₊, -(CO)- CₙF₂ₙ₊₁, -O-CₙF₂ₙ₊₁ et CₙF₂ₙ₊₁, avec n étant un nombre entier de 1 à 20, ou
- un radical aryle contenant au moins deux noyaux aromatiques tel que biphényle, naphtyle, éventuellement substitué par au moins un atome d'halogène, notamment un atome de fluor ou un groupement électroattracteur tel que : -CF₃, -OCF₃, -NO₂, -CN, -SO₂-CₙF₂ₙ₊, -(CO)-CₙF₂ₙ₊₁, -O-CₙF₂ₙ₊₁ et CₙF₂ₙ₊₁, avec n étant un nombre entier de 1 à 20,
- le symbole Z⁺ est un cation d'un atome ou d'un groupement d'atomes et de préférence le symbole Z⁺ est Na⁺, Li⁺ ou K⁺, et
- le symbole Y⁻ est un anion d'un atome ou un groupement d'atomes et de préférence Y⁻ est l'anion bromure (Br⁻) ou iodure (I⁻),
b) on prépare un mélange n° 1 constitué d'un sel précurseur de formule **(VIII)** et d'eau et un mélange n° 2 constitué d'au moins un sel précurseur de formule **(IX)** et d'au moins un alcool de Guerbet selon l'invention et tel que décrit ci-dessus,
c) dans un réacteur sous agitation et éventuellement sous reflux, on place le mélange n° 1 ou le mélange n° 2, et de préférence on élève et maintient la température du réacteur dans un intervalle compris entre 30 et 80°C et encore plus préférentiellement dans un intervalle compris entre 50 et 80°C
d) puis on ajoute sous agitation soit le mélange n° 1 lorsqu'à l'étape c) le mélange n° 2 est présent dans le réacteur, soit le mélange n° 2 lorsqu'à l'étape c) le mélange n° 1 est présent dans le réacteur, et de préférence on maintient la température du réacteur dans un intervalle compris entre 30 et 80°C et encore plus préférentiellement dans un intervalle compris entre 50 et 80°C,
e) lorsque la réaction est terminée, on refroidit éventuellement le réacteur et on sépare la phase organique de la phase aqueuse,
f) éventuellement on lave la phase organique à l'aide d'eau,
g) éventuellement on dévolatilise la phase organique, et
h) on récupère la phase organique qui est la composition **P** à laquelle on ajoute éventuellement au moins un stabilisant thermique **C.**

12. Procédé de préparation de la composition **P** telle que définie selon l'une quelconque des revendications 1 à 9 comprenant les étapes suivantes:
a) on prépare des sels précurseurs de formule **(VIII)** et **(IX)** suivantes: 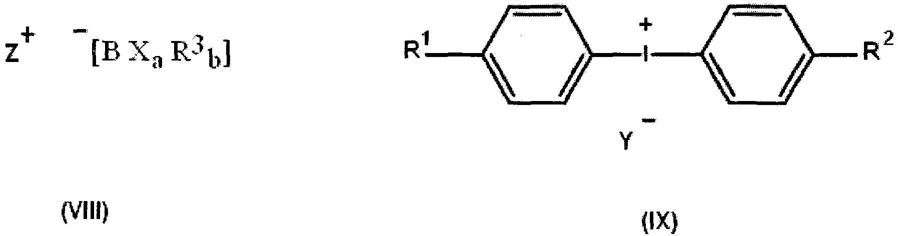 formules dans lesquelles :
- les symboles R¹ et R² sont identiques ou différents, et représentent chacun un radical alkyle linéaire ou ramifié ayant de 10 à 30 atomes de carbone et de préférence de 10 à 20 atomes de carbone et encore plus préférentiellement de 10 à 15 atomes de carbone,
- a et b sont des nombres entiers tels que 0 ≤ a ≤ 3, 1 ≤ b ≤ 4 et a + b = 4,
- les symboles X, identiques ou différents, représentent :
- un atome de chlore ou de fluor avec 0 ≤ a ≤ 3, ou
- une fonction OH avec 0 ≤ a ≤ 2, et
- les symboles R³, identiques ou différents, représentent:
- un radical phényle substitué par :
- au moins 2 atomes d'halogène, et de préférence par au moins 2 atomes de fluor, ou
- au moins un groupement électroattracteur choisi parmi le groupe constitué par: -CF₃, -OCF₃, -NO₂, -CN, -SO₂-CₙF₂ₙ₊, -(CO)- CₙF₂ₙ₊₁, -O-CₙF₂ₙ₊₁ et CₙF₂ₙ₊₁, avec n étant un nombre entier de 1 à 20, ou
- un radical aryle contenant au moins deux noyaux aromatiques tel que biphényle, naphtyle, éventuellement substitué par au moins un atome d'halogène, notamment un atome de fluor ou un groupement électroattracteur tel que : -CF₃, -OCF₃, -NO₂, -CN, -SO₂-CₙF₂ₙ₊, -(CO)-CₙF₂ₙ₊₁, -O-CₙF₂ₙ₊₁ et CₙF₂ₙ₊₁, avec n étant un nombre entier de 1 à 20,
- le symbole Z⁺ est un cation d'un atome ou d'un groupement d'atomes et de préférence le symbole Z⁺ est Na⁺, Li⁺ ou K⁺, et
- le symbole Y⁻ est un anion d'un atome ou un groupement d'atomes et de préférence Y⁻ est l'anion bromure (Br⁻) ou iodure (I⁻),
b) on prépare un mélange n° 1 constitué d'un sel précurseur de formule **(VIII)** et d'eau et un mélange n° 2 constitué d'au moins un sel précurseur de formule **(IX)** et d'au moins un alcool de Guerbet selon l'invention et tel que décrit ci-dessus,
c) dans un réacteur sous agitation et éventuellement sous reflux, on place le mélange n° 1 ou le mélange n° 2, et de préférence on élève et maintient la température du réacteur dans un intervalle compris entre 30 et 80°C et encore plus préférentiellement dans un intervalle compris entre 50 et 80°C
d) puis on ajoute sous agitation soit le mélange n° 1 lorsqu'à l'étape c) le mélange n° 2 est présent dans le réacteur, soit le mélange n° 2 lorsqu'à l'étape c) le mélange n° 1 est présent dans le réacteur, et de préférence on maintient la température du réacteur dans un intervalle compris entre 30 et 80°C et encore plus préférentiellement dans un intervalle compris entre 50 et 80°C,
e) lorsque la réaction est terminée, on refroidit éventuellement le réacteur et on sépare la phase organique de la phase aqueuse,
f) éventuellement on lave la phase organique à l'aide d'eau,
g) éventuellement on dévolatilise la phase organique, et
h) on récupère la phase organique qui est la composition **P** à laquelle on ajoute éventuellement au moins un stabilisant thermique **C.**

13. Composition **R** polymérisable et/ou réticulable par voie cationique, sous activation thermique et/ou actinique et/ou par faisceau d'électrons comprenant :
- au moins un composé organosilicié **D** polymérisable et/ou réticulable par voie cationique;
- une quantité catalytique efficace de la composition **P** telle que définie selon l'une quelconque des revendications 1 à 9 comme photoamorceur cationique,
- éventuellement une quantité efficace d'au moins un photosensibilisateur **E,**
- éventuellement au moins un solvant organique **F,**
- éventuellement au moins un additif **Q,**
- éventuellement au moins un stabilisant thermique **C** et de préférence tel que défini selon la revendication 7, et
- événtuellement au moins un monomères, oligomères et/ou polymères **H** à groupements organofonctionnels d'espèce acrylate;

14. Composition **R** selon la revendication 13 dans laquelle le composé organosilicié **D** est un polyorganosiloxane comprenant au moins deux atomes de silicium et comprenant:
- au moins un motif siloxyle de formule **(VIII)** et de préférence au moins deux motifs siloxyle de formule **(VIII)** suivante :
Z¹(R⁰)ₐSiO_{(3-a)/2} **_{(VIII)}**
dans laquelle :
- a = 0, 1 ou 2,
- R⁰ , identique ou différent lorsque a>1, représente un radical alkyle, cycloalkyle, aryle, alcényle, hydrogéno ou alcoxy et de préférence un alkyle en C₁ à C₆,
- Z¹, identique ou différent lorsque le nombre de motifs de formule **(VIII)** est supérieur à 1, est un substituant organique comportant au moins une fonction réactive G choisie parmi le groupe constitué par les fonctions : époxy, alcénylether, oxétane, dioxolane, (mét)acrylate et carbonate, et de préférence Z¹ est choisi parmi le groupe constitué par les fonctions époxy et dioxolane, et
- éventuellement au moins un motif siloxyle de formule **(IX)** suivante: 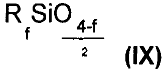 dans laquelle :
- f = 0, 1, 2 ou 3, et
- les symboles R représentent, indépendamment les uns des autres, des radicaux monovalent choisis parmi le groupe constitué par un alkyle, un cycloalkyle, un aryle, un alcényle, un radical hydrogéno et un radical alcoxy.

15. Composition R selon la revendication 13 dans laquelle le composé organosilicié D est un silane comprenant un substituant organique comprenant au moins une fonction réactive G choisie parmi le groupe constitué par les fonctions : oxirane, alcénylether, oxétane, dioxolane, (mét)acrylate et carbonate, et de préférence choisie parmi le groupe constitué par les fonctions époxy et dioxolane.

16. Composition **R** selon la revendication 14 ou 15 dans laquelle la fonction réactive **G** est choisie parmi les groupements **(1)** à **(11)** suivants : 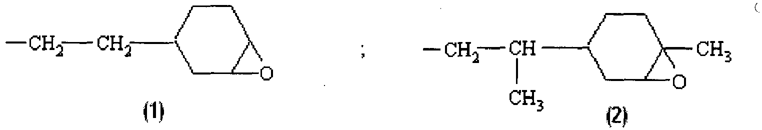 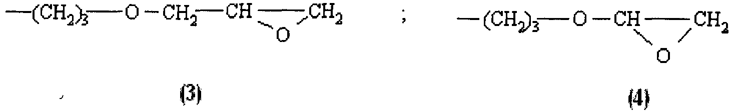 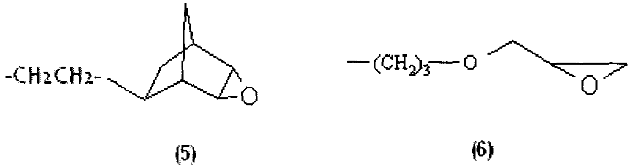 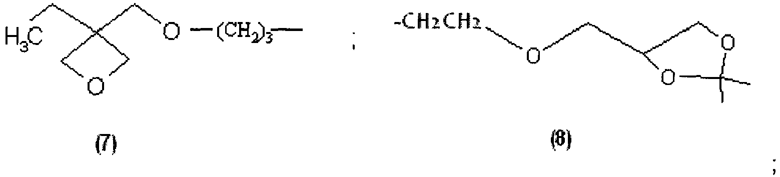
-(CH₂)₃-O-CH=CH₂ ; -(CH₂)₃₋O-R-O-CH=CH₂ ; -(CH₂)₃-O-CH=CH-R¹⁹ **(9) (10) (11)**
formules dans desquelles
• R¹⁸ représente :
- un radical alkylène linéaire ou ramifié en C₁-C₁₂, éventuellement substitué,
- ou un radical arylène en C₅-C₁₂, de préférence phénylène, éventuellement substitué, de préférence par un à trois groupements alkyles en C₁-C₆, et
• R¹⁹ représente un radical alkyle linéaire ou ramifié en C₁-C₆.

17. Composition **R** selon la revendication 14 dans laquelle le composé organosilicié **D** est choisi parmi le groupe constitué par les composés **(12)** à **(24)** suivants : 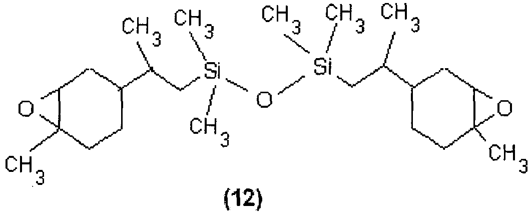 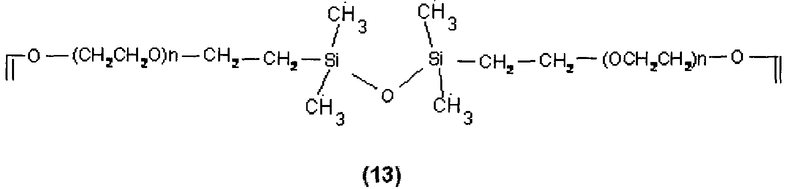 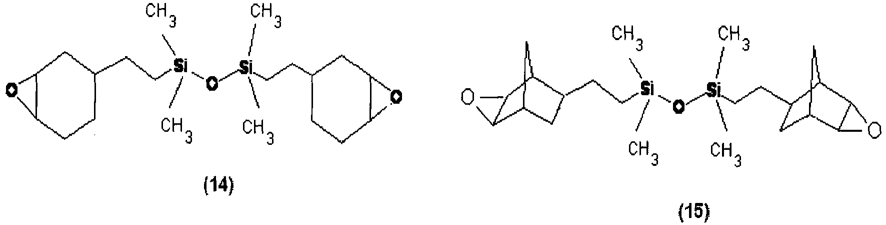 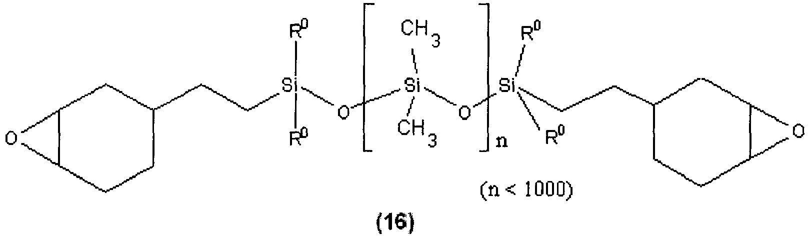 formule dans laquelle R° est un groupement alkyl de C₁ à C₂₀ et de préférence un groupement méthyle. 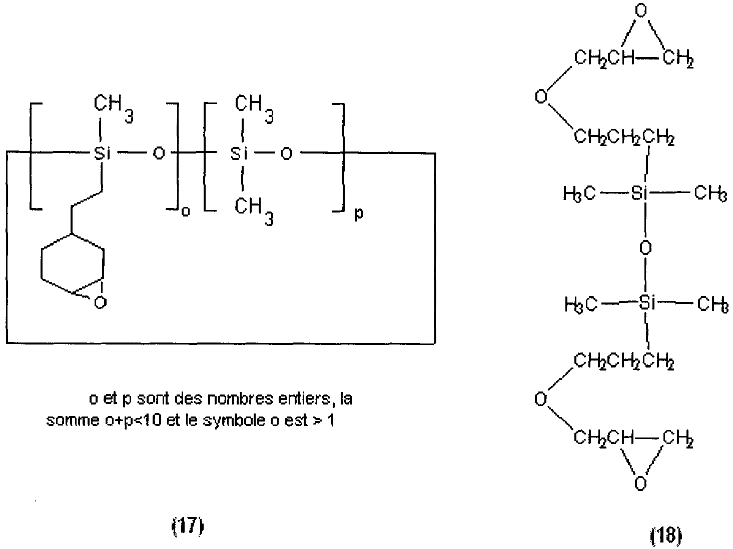 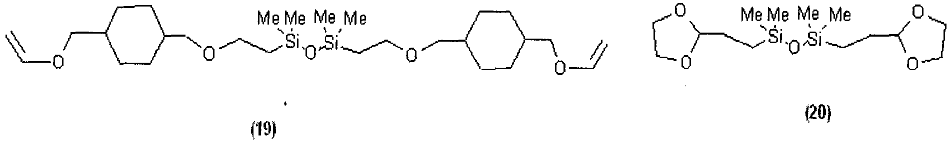 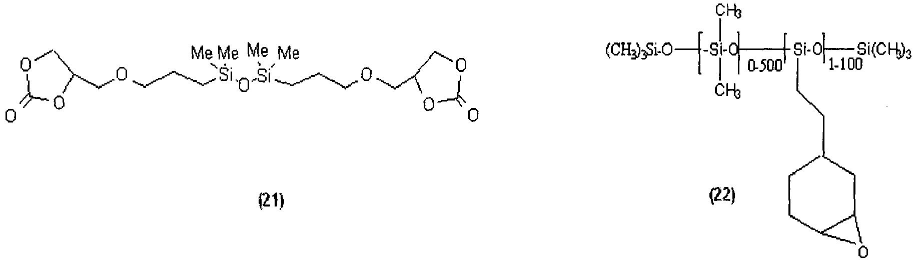 formules dans lesquels les symboles Me signifient un groupement méthyl.

18. Composition **R** selon la revendication 15 dans laquelle le composé organosilicié **D** est le silane suivant :

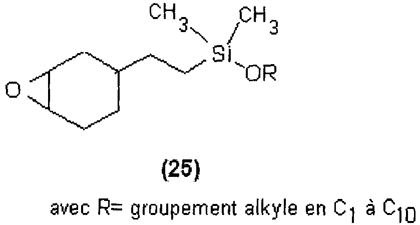

19. Procédé pour rendre des articles non adhérents à des surfaces auxquelles ils adhéreraient normalement, **caractérisé en ce qu'**on applique entre 0,1 et 5 g par m² de surface dudit l'article à enduire de la composition **R** faisant l'objet de l'une quelconque des revendications 13 à 18 et on réticule ladite composition par apport d'énergie dont au moins une partie ou la totalité est fournie par voie photochimique ou par faisceau d'électrons.

20. Procédé selon la revendication 19 **caractérisé en ce que** l'opération de réticulation est réalisée par un rayonnement U.V. de longueur d'onde de l'ordre de 200 à 400 namomètres.

21. Film ou revêtement obtenu à partir de la réticulation de la composition **R** telle que définie selon l'une quelconque des revendications 13 à 18 par voie thermique ou actinique.

22. Article dont une surface au moins est revêtue d'un film ou d'un revêtement obtenu selon le procédé défini selon l'une quelconque des revendications 19 ou 20.

## Patentansprüche

1. Zusammensetzung P, umfassend:
1) mindestens ein Iodoniumsalz **A** der folgenden Formel **(I)':** 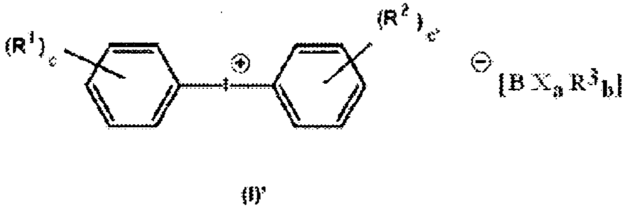 in der:
- die Symbole R¹ und R² gleich oder verschieden sind und jeweils für einen linearen oder verzweigten Alkylrest mit 10 bis 30 Kohlenstoffatomen und vorzugsweise 10 bis 20 Kohlenstoffatomen, noch weiter bevorzugt 10 bis 15 Kohlenstoffatomen, noch weiter bevorzugt 10 bis 13 Kohlenstoffatomen und noch weiter bevorzugt 12 Kohlenstoffatomen stehen,
- a und b solche ganze Zahlen sind, dass 0 ≤ a ≤ 3, 1 ≤ b ≤ 4 und a + b = 4,
- c und c' gleiche oder verschiedene ganze Zahlen im Bereich von 1 bis 5 sind und c und c' vorzugsweise gleich 1 sind,
- die Symbole X gleich oder verschieden sind und für:
• ein Chlor- oder Fluoratom mit 0 ≤ a ≤ 3 oder
• eine OH-Funktion mit 0 ≤ a ≤ 2 stehen und
- die Symbole R³ gleich oder verschieden sind und für:
• einen Phenylrest, der durch:
- mindestens 2 Halogenatome und vorzugsweise durch mindestens 2 Fluoratome oder
- mindestens eine elektronenanziehende Gruppierung aus der Gruppe bestehend aus: -CF₃, -OCF₃, -NO₂, -CN, -SO₂-CnF₂ₙ₊,
- (CO) -CₙF₂ₙ₊₁, -O-CnF₂ₙ₊₁ und -CₙF₂ₙ₊₁, wobei n eine ganze Zahl von 1 bis 20 ist, substituiert ist, oder
• einen Arylrest mit mindestens zwei aromatischen Kernen wie Biphenyl, Naphthyl, der gegebenenfalls durch mindestens ein Halogenatom, insbesondere ein Fluoratom, oder eine elektronenanziehende Gruppierung wie : -CF₃, -OCF₃, -NO₂, -CN, -SO₂-CnF₂ₙ₊,-(CO) -CₙF₂ₙ₊₁, -O-CₙF₂ₙ₊₁ und CₙF₂ₙ₊₁, wobei n eine ganze Zahl von 1 bis 20 ist, substituiert ist,
stehen,
2) mindestens einen Wasserstoffdonor **B** aus der Gruppe bestehend aus Guerbet-Alkoholen der folgenden Formel **(II):**
R⁴-CH(CH₂OH)-R⁵ **(II)**
in der:
- die Symbole R⁴ und R⁵ gleich oder verschieden sind und jeweils für einen Alkylrest mit 4 bis 12 Kohlenstoffatomen stehen und
- mit der zusätzlichen Maßgabe, dass die Gesamtzahl der Kohlenstoffatome des Guerbet-Alkohols 10 bis 20 Kohlenstoffatome beträgt, und
3) gegebenenfalls mindestens einen Wärmestabilisator **C.**

2. Zusammensetzung **P** nach Anspruch 1, umfassend:
1) mindestens ein Iodoniumsalz **A** der folgenden Formel **(I) :** 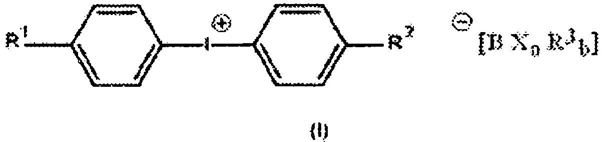 in der:
- die Symbole R¹ und R² gleich oder verschieden sind und jeweils für einen linearen oder verzweigten Alkylrest mit 10 bis 30 Kohlenstoffatomen und vorzugsweise 10 bis 20 Kohlenstoffatomen, noch weiter bevorzugt 10 bis 15 Kohlenstoffatomen, noch weiter bevorzugt 10 bis 13 Kohlenstoffatomen und noch weiter bevorzugt 12 Kohlenstoffatomen stehen,
- a und b solche ganze Zahlen sind, dass 0 ≤ a ≤ 3, 1 ≤ b ≤ 4 und a + b = 4,
- die Symbole X gleich oder verschieden sind und für:
• ein Chlor- oder Fluoratom mit 0 ≤ a ≤ 3 oder
• eine OH-Funktion mit 0 ≤ a ≤ 2 stehen und
- die Symbole R³ gleich oder verschieden sind und für:
• einen Phenylrest, der durch:
- mindestens 2 Halogenatome und vorzugsweise durch mindestens 2 Fluoratome oder
- mindestens eine elektronenanziehende Gruppierung aus der Gruppe bestehend aus: -CF₃, -OCF₃, -NO₂, -CN, -SO₂-CₙF₂ₙ₊,
- (CO) -CₙF₂ₙ₊₁, -O-CₙF₂ₙ₊₁ und -CₙF₂ₙ₊₁, wobei n eine ganze Zahl von 1 bis 20 ist, substituiert ist, oder
• einen Arylrest mit mindestens zwei aromatischen Kernen wie Biphenyl, Naphthyl, der gegebenenfalls durch mindestens ein Halogenatom, insbesondere ein Fluoratom, oder eine elektronenanziehende Gruppierung wie : -CF₃, -OCF₃, -NO₂, -CN, -SO₂-CₙF₂ₙ₊,-(CO) -CₙF₂ₙ₊₁, -O-CₙF₂ₙ₊₁ und CₙF₂ₙ₊₁, wobei n eine ganze Zahl von 1 bis 20 ist, substituiert ist,
stehen,
2) mindestens einen Wasserstoffdonor **B** aus der Gruppe bestehend aus Guerbet-Alkoholen der folgenden Formel **(II) :**
R⁴-CH(CH₂OH)-R⁵ **(II)**
in der:
- die Symbole R⁴ und R⁵ gleich oder verschieden sind und jeweils für einen Alkylrest mit 4 bis 12 Kohlenstoffatomen stehen und
- mit der zusätzlichen Maßgabe, dass die Gesamtzahl der Kohlenstoffatome des Guerbet-Alkohols 10 bis 20 Kohlenstoffatome beträgt, und
3) gegebenenfalls mindestens einen Wärmestabilisator **C.**

3. Zusammensetzung **P** nach einem der vorhergehenden Ansprüche, wobei das Anion des Iodoniumsalzes **A** aus der aus den folgenden Anionen bestehenden Gruppe: [B(C₆F₅)₄]-, [B(C₆H₃(CF₃)₂)₄]-, [B(C₆H₄OCF₃)₄]⁻, [B(C₆H₄CF₃)_{4]}⁻, [(C₆F₅)₂BF_{2]}⁻, [C₆F₅BF₃]⁻ und [B(C₆H₃F₂)₉]⁻ und vorzugsweise aus der aus den folgenden Anionen bestehenden Untergruppe: B(C₆F₅)₄- und [B(C₆H₃(CF₃)₂)₄]⁻ ausgewählt ist.

4. Zusammensetzung **P** nach Anspruch 1 oder 2, wobei es sich bei dem Wasserstoffdonor **B** um einen Guerbet-Alkohol mit der folgenden Formel handelt: 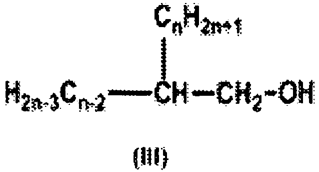 in der das Symbol n für eine ganze Zahl von 6 bis 10 steht.

5. Zusammensetzung **P** nach Anspruch 1, 2 oder 4, wobei der Wasserstoffdonor **B** aus der aus den folgenden Guerbet-Alkoholen bestehenden Gruppe: 2-Butyl-1-octanol, 2-Pentyl-1-nonanol, 2-Hexyldecan-1-ol, 2-Octyldecan-1-ol und 2-Octyldodecan-1-ol und Mischungen davon ausgewählt ist.

6. Zusammensetzung **P** nach Anspruch 1 oder 2, umfassend:
a) 1 bis 95 Gewichtsteile, vorzugsweise 20 bis 80 Gewichtsteile, bezogen auf das Gesamtgewicht der Zusammensetzung **P,** des Iodoniumsalzes bzw. der Iodoniumsalze **A,**
b) 5 bis 99 Gewichtsteile, vorzugsweise 20 bis 80 Gewichtsteile, bezogen auf das Gesamtgewicht der Zusammensetzung **P,** mindestens eines Wasserstoffdonors **B** und
c) 0 bis 5 Gewichtsteile, bezogen auf das Gesamtgewicht der Zusammensetzung **P,** mindestens eines Wärmestabilisators **C.**

7. Zusammensetzung **P** nach Anspruch 1, 2 oder 6, wobei der Wärmestabilisator **C** aus der Gruppe bestehend aus einem Amin, einer Verbindung, deren chemische Struktur eine sterisch gehinderte Gruppe und eine Nitroxylfunktion umfasst, einer Verbindung, deren chemische Struktur eine sterisch gehinderte Gruppe und eine Phenolfunktion umfasst, einer organischen Phosphorverbindung und Kombinationen davon ausgewählt ist.

8. Zusammensetzung **P** nach Anspruch 1, 2 oder 6, wobei das Iodoniumsalz **A** die folgende Formel **(IV)** aufweist: 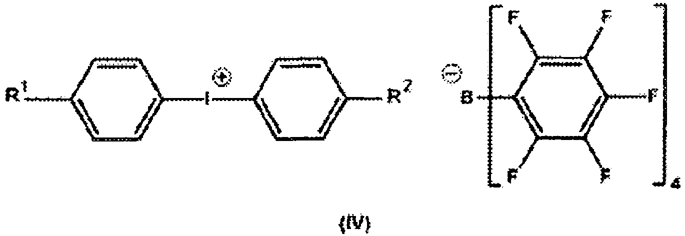 in der:
- die Symbole R¹ und R² gleich oder verschieden sind und jeweils für einen linearen oder verzweigten Alkylrest mit 10 bis 30 Kohlenstoffatomen und vorzugsweise 10 bis 20 Kohlenstoffatomen und noch weiter bevorzugt 10 bis 15 Kohlenstoffatomen stehen.

9. Zusammensetzung **P** nach Anspruch 1, 2 oder 8, wobei die Symbole R¹ und R² gleich oder verschieden sind und jeweils für einen Alkylrest stehen, der aus der aus den folgenden Resten bestehenden Gruppe ausgewählt ist: 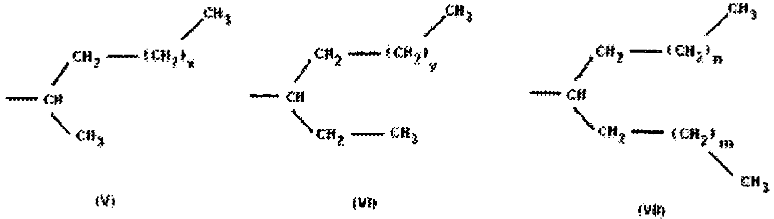 wobei:
- x eine ganze Zahl im Bereich von 6 bis 16 und vorzugsweise 6 bis 11 ist,
- y eine ganze Zahl im Bereich von 5 bis 15 und vorzugsweise 5 bis 10 ist und
- n und m gleiche oder verschiedene ganze Zahlen sind und die Summe n+m zwischen 5 und 15 inklusive der Grenzwerte liegt.

10. Verwendung der Zusammensetzung **P** gemäß einem der vorhergehenden Ansprüche als kationischer Photoinitiator.

11. Verfahren zur Herstellung der Zusammensetzung **P** gemäß einem der Ansprüche 1 bis 9, das folgende Schritte umfasst:
a) man stellt Vorläufersalze der folgenden Formel **(VIII)'** und **(IX)'** her: 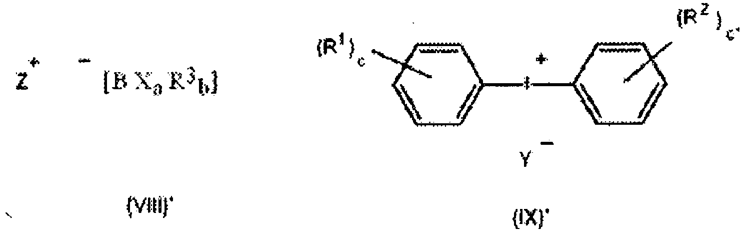 wobei in den Formeln:
- die Symbole R¹ und R² gleich oder verschieden sind und jeweils für einen linearen oder verzweigten Alkylrest mit 10 bis 30 Kohlenstoffatomen und vorzugsweise 10 bis 20 Kohlenstoffatomen und noch weiter bevorzugt 10 bis 15 Kohlenstoffatomen stehen,
- a und b solche ganze Zahlen sind, dass 0 ≤ a ≤ 3 , 1 ≤ b ≤ 4 und a + b = 4,
- c und c' gleiche oder verschiedene ganze Zahlen im Bereich von 1 bis 5 sind und c und c' vorzugsweise gleich 1 sind,
- die Symbole X gleich oder verschieden sind und für:
• ein Chlor- oder Fluoratom mit 0 ≤ a ≤ 3 oder
• eine OH-Funktion mit 0 ≤ a ≤ 2 stehen und
- die Symbole R³ gleich oder verschieden sind und für:
• einen Phenylrest, der durch:
- mindestens 2 Halogenatome und vorzugsweise durch mindestens 2 Fluoratome oder
- mindestens eine elektronenanziehende Gruppierung aus der Gruppe bestehend aus: -CF₃, -OCF₃, -NO₂, -CN, -SO₂-CₙF₂ₙ₊, -(CO)-CₙF₂ₙ₊₁, -O-CₙF₂ₙ₊₁ und CₙF₂ₙ₊₁, wobei n eine ganze Zahl von 1 bis 20 ist, substituiert ist, oder
• einen Arylrest mit mindestens zwei aromatischen Kernen wie Biphenyl, Naphthyl, der gegebenenfalls durch mindestens ein Halogenatom, insbesondere ein Fluoratom, oder eine elektronenanziehende Gruppierung wie: -CF₃, -OCF₃, -NO₂, -CN, -SO₂-CₙF₂ₙ₊, - (CO)-CₙF₂ₙ₊₁, -O-CₙF₂ₙ₊₁ und CₙF₂ₙ₊₁, wobei n eine ganze Zahl von 1 bis 20 ist, substituiert ist,
stehen,
- das Symbol Z⁺ für ein Kation eines Atoms oder einer Gruppe von Atomen steht und das Symbol Z⁺ vorzugsweise für Na⁺, Li⁺ oder K⁺ steht und
- das Symbol Y⁻ für ein Anion eines Atoms oder einer Gruppe von Atomen steht und Y⁻vorzugsweise für das Bromid-Anion (Br⁻) oder Iodid-Anion (I⁻) steht,
b) man stellt eine Mischung Nr. 1, die aus einem Vorläufersalz der Formel **(VIII)** und Wasser besteht, und eine Mischung Nr. 2, die aus mindestens einem Vorläufersalz der Formel **(IX)** und mindestens einem erfindungsgemäßen und wie oben beschriebenen Guerbet-Alkohol besteht, her,
c) man bringt die Mischung Nr.1 oder die Mischung Nr.2 unter Rühren und gegebenenfalls unter Rückfluss in einen Reaktor ein und erhöht und hält vorzugsweise die Temperatur des Reaktors in einem Intervall zwischen 30 und 80°C und noch weiter bevorzugt in einem Intervall zwischen 50 und 80°C,
d) dann gibt man unter Rühren entweder die Mischung Nr. 1, wenn in Schritt c) die Mischung Nr. 2 im Reaktor vorliegt, oder die Mischung Nr. 2, wenn in Schritt c) die Mischung Nr. 1 im Reaktor vorliegt, zu und hält vorzugsweise die Temperatur des Reaktors in einem Intervall zwischen 30 und 80°C und noch weiter bevorzugt in einem Intervall zwischen 50 und 80°C,
e) wenn die Reaktion beendet ist, kühlt man gegebenenfalls den Reaktor ab und trennt die organische Phase von der wässrigen Phase,
f) gegebenenfalls wäscht man die organische Phase mit Wasser,
g) gegebenenfalls wird die organische Phase entgast, und
h) man gewinnt die organische Phase, bei der es sich um die Zusammensetzung **P** handelt, die gegebenenfalls mit mindestens einem Wärmestabilisator **C** versetzt wird.

12. Verfahren zur Herstellung der Zusammensetzung **P** gemäß einem der Ansprüche 1 bis 9, das folgende Schritte umfasst:
a) man stellt Vorläufersalze der folgenden Formel **(VIII)** und **(IX)** her: 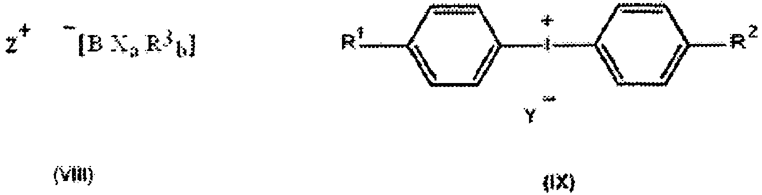 wobei in den Formeln:
- die Symbole R¹ und R² gleich oder verschieden sind und jeweils für einen linearen oder verzweigten Alkylrest mit 10 bis 30 Kohlenstoffatomen und vorzugsweise 10 bis 20 Kohlenstoffatomen und noch weiter bevorzugt 10 bis 15 Kohlenstoffatomen stehen,
- a und b solche ganze Zahlen sind, dass 0 ≤ a ≤ 3, 1 ≤ b ≤ 4 und a + b = 4,
- die Symbole X gleich oder verschieden sind und für:
• ein Chlor- oder Fluoratom mit 0 ≤ a ≤ 3 oder
• eine OH-Funktion mit 0 ≤ a ≤ 2 stehen und
- die Symbole R³ gleich oder verschieden sind und für:
• einen Phenylrest, der durch:
- mindestens 2 Halogenatome und vorzugsweise durch mindestens 2 Fluoratome oder
- mindestens eine elektronenanziehende Gruppierung aus der Gruppe bestehend aus: -CF₃, -OCF₃, -NO₂, -CN, -SO₂-CₙF₂ₙ₊,
- (CO)-CₙF₂ₙ₊₁, -O-CₙF₂ₙ₊₁ und CₙF₂ₙ₊₁, wobei n eine ganze Zahl von 1 bis 20 ist, substituiert ist, oder
• einen Arylrest mit mindestens zwei aromatischen Kernen wie Biphenyl, Naphthyl, der gegebenenfalls durch mindestens ein Halogenatom, insbesondere ein Fluoratom, oder eine elektronenanziehende Gruppierung wie: -CF₃, -OCF₃, -NO₂, -CN, -SO₂-CₙF₂ₙ₊, - (CO)-CₙF₂ₙ₊₁, -O-CₙF₂ₙ₊₁ und CₙF₂ₙ₊₁, wobei n eine ganze Zahl von 1 bis 20 ist, substituiert ist,
stehen,
- das Symbol Z⁺ für ein Kation eines Atoms oder einer Gruppe von Atomen steht und das Symbol Z⁺ vorzugsweise für Na⁺, Li⁺ oder K⁺ steht und
- das Symbol Y⁻ für ein Anion eines Atoms oder einer Gruppe von Atomen steht und Y⁻ vorzugsweise für das Bromid-Anion (Br⁻) oder Iodid-Anion (I⁻) steht,
b) man stellt eine Mischung Nr. 1, die aus einem Vorläufersalz der Formel **(VIII)** und Wasser besteht, und eine Mischung Nr. 2, die aus mindestens einem Vorläufersalz der Formel **(IX)** und mindestens einem erfindungsgemäßen und wie oben beschriebenen Guerbet-Alkohol besteht, her,
c) man bringt die Mischung Nr.1 oder die Mischung Nr.2 unter Rühren und gegebenenfalls unter Rückfluss in einen Reaktor ein und erhöht und hält vorzugsweise die Temperatur des Reaktors in einem Intervall zwischen 30 und 80°C und noch weiter bevorzugt in einem Intervall zwischen 50 und 80°C,
d) dann gibt man unter Rühren entweder die Mischung Nr. 1, wenn in Schritt c) die Mischung Nr. 2 im Reaktor vorliegt, oder die Mischung Nr. 2, wenn in Schritt c) die Mischung Nr. 1 im Reaktor vorliegt, zu und hält vorzugsweise die Temperatur des Reaktors in einem Intervall zwischen 30 und 80°C und noch weiter bevorzugt in einem Intervall zwischen 50 und 80°C,
e) wenn die Reaktion beendet ist, kühlt man gegebenenfalls den Reaktor ab und trennt die organische Phase von der wässrigen Phase,
f) gegebenenfalls wäscht man die organische Phase mit Wasser,
g) gegebenenfalls wird die organische Phase entgast, und
h) man gewinnt die organische Phase, bei der es sich um die Zusammensetzung **P** handelt, die gegebenenfalls mit mindestens einem Wärmestabilisator **C** versetzt wird.

13. Zusammensetzung **R,** die unter thermischer Aktivierung und/oder aktinischer Aktivierung und/oder Elektronenstrahl-Aktivierung kationisch polymerisierbar und/oder vernetzbar ist, umfassend:
- mindestens eine kationisch polymerisierbare und/oder vernetzbare Organosiliciumverbindung **D;**
- eine katalytisch wirksame Menge der Zusammensetzung **P** gemäß einem der Ansprüche 1 bis 9 als kationischer Photoinitiator,
- gegebenenfalls eine wirksame Menge mindestens eines Photosensibilisators **E,**
- gegebenenfalls mindestens ein organisches Lösungsmittel **F,**
- gegebenenfalls mindestens ein Additiv **Q,**
- gegebenenfalls mindestens einen Wärmestabilisator **C** und vorzugsweise wie in Anspruch 7 definiert und
- gegebenenfalls mindestens ein Monomer, Oligomer und/oder Polymer **H** mit organofunktionellen Gruppen vom Acrylat-Typ.

14. Zusammensetzung **R** nach Anspruch 13, wobei es sich bei der Organosiliciumverbindung **D** um ein Polyorganosiloxan mit mindestens zwei Siliciumatomen und:
- mindestens einer Siloxyleinheit der Formel **(VIII)** und vorzugsweise mindestens zwei Siloxyleinheiten der folgenden Formel **(VIII):**
Z¹(R⁰)ₐSiO(₃₋ₐ)_{/2} **(VIII)**
in der:
- a = 0, 1 oder 2,
- R⁰, das gleich oder verschieden ist, wenn a > 1, für einen Alkyl-, Cycloalkyl-, Aryl-, Alkenyl-, Wasserstoff- oder Alkoxyrest und vorzugsweise ein C₁- bis C₆-Alkyl steht,
- Z¹, das gleich oder verschieden ist, wenn die Zahl der Einheiten der Formel **(VIII)** größer als 1 ist, für einen organischen Substituenten mit mindestens einer reaktiven Funktion **G** aus der Gruppe bestehend aus den Funktionen: Epoxid, Alkenylether, Oxetan, Dioxolan, (Meth)acrylat und Carbonat steht und Z¹ vorzugsweise aus der Gruppe bestehend aus Epoxid- und Dioxolanfunktionen ausgewählt ist, und
- gegebenenfalls mindestens einer Siloxyleinheit der folgenden Formel **(IX) :** 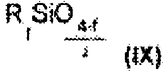 in der:
- f = 0, 1, 2 oder 3 und
- die Symbole R unabhängig voneinander für einwertige Reste aus der Gruppe bestehend aus einem Alkyl, einem Cycloalkyl, einem Aryl, einem Alkenyl, einem Wasserstoffrest und einem Alkoxyrest stehen,
handelt.

15. Zusammensetzung **R** nach Anspruch 13, wobei es sich bei der Organosiliciumverbindung **D** um ein Silan mit einem organischen Substituenten mit mindestens einer reaktiven Funktion **G** aus der Gruppe bestehend aus den Funktionen: Oxiran, Alkenylether, Oxetan, Dioxolan, (Meth)acrylat und Carbonat und vorzugsweise aus der Gruppe bestehend aus Epoxid- und Dioxolanfunktionen handelt.

16. Zusammensetzung **R** nach Anspruch 14 oder 15, wobei die reaktive Funktion **G** aus den folgenden Gruppierungen **(1)** bis **(11)** ausgewählt ist: 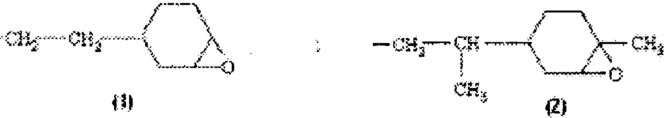 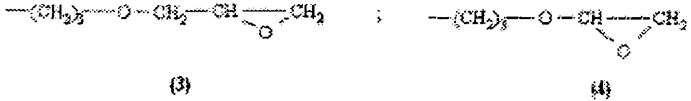 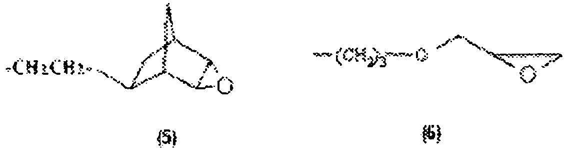 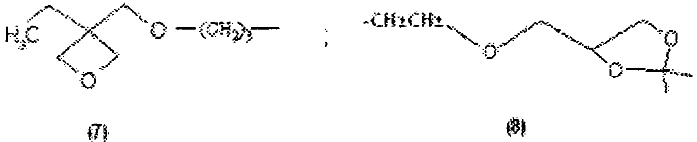 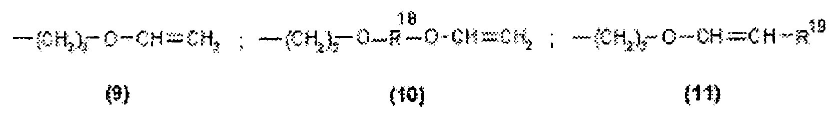 wobei in den Formeln:
• R¹⁸ für
- einen linearen oder verzweigten C₁-C₁₂-Alkylenrest, der gegebenenfalls substituiert ist,
- oder einen C₅-C₁₂-Arylen- und vorzugsweise Phenylenrest, der gegebenenfalls substituiert ist, vorzugsweise durch eine bis drei C₁-C₆-Alkylgruppen,
steht und
• R¹⁹ für einen linearen oder verzweigten C₁-C₆-Alkylrest steht.

17. Zusammensetzung **R** nach Anspruch 14, wobei die Organosiliciumverbindung **D** aus der Gruppe bestehend aus den folgenden Verbindungen **(12)** bis **(24)** ausgewählt ist: 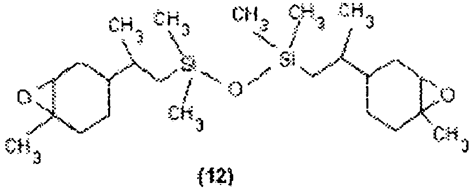 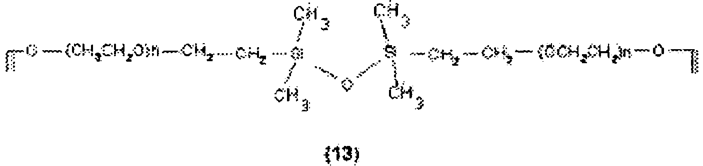 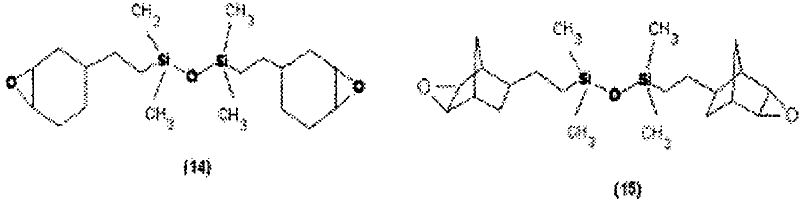 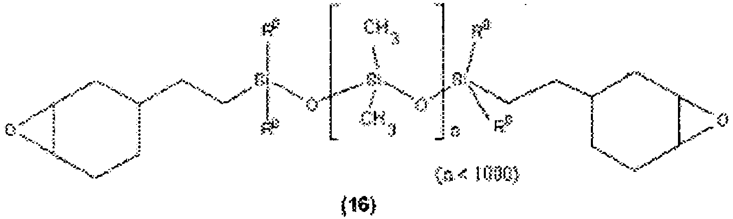 wobei in der Formel R^{o} für eine C₁- bis C₂₀-Alkylgruppe und vorzugsweise eine Methylgruppe steht, 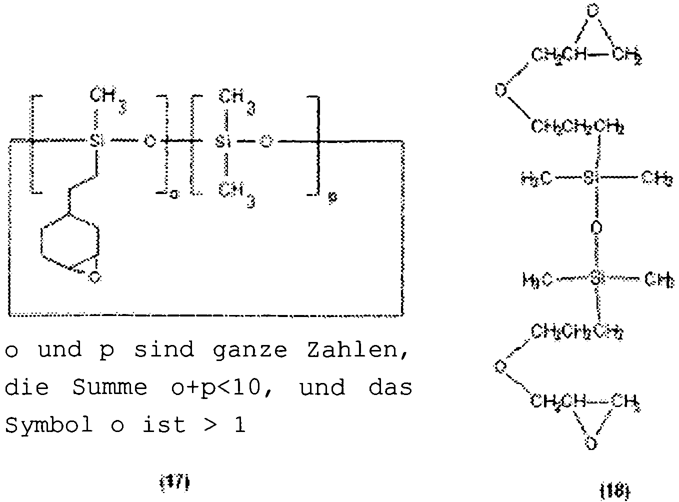 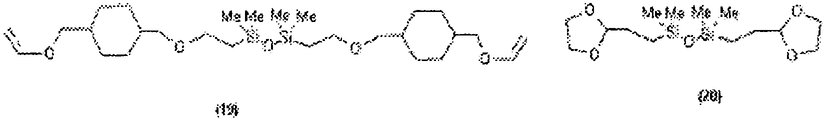 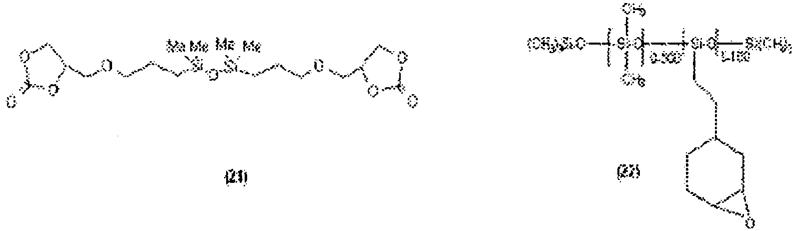 wobei in den Formeln die Symbole Me eine Methylgruppe darstellen.

18. Zusammensetzung **R** nach Anspruch 15, wobei es sich bei der Organosiliciumverbindung **D** um das folgende Silan handelt:

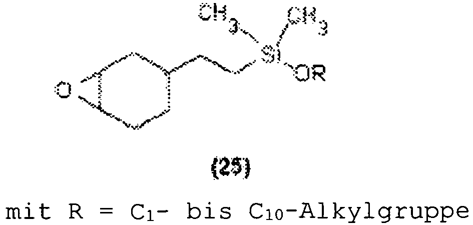

19. Verfahren zum Nichthaftendmachen von Artikeln gegenüber Oberflächen, auf denen sie normalerweise haften würden, **dadurch gekennzeichnet, dass** man zwischen 0,1 und 5 g pro m² Oberfläche des zu beschichtenden Artikels die Zusammensetzung **R,** die Gegenstand eines der Ansprüche 13 bis 18 ist, aufbringt und die Zusammensetzung durch Zufuhr von Energie, die mindestens teilweise oder vollständig auf photochemischem Wege oder durch einen Elektronenstrahl bereitgestellt wird, vernetzt.

20. Verfahren nach Anspruch 19, **dadurch gekennzeichnet, dass** die Vernetzung mit UV-Strahlung mit einer Wellenlänge in der Größenordnung von 200 bis 400 Nanometer durchgeführt wird.

21. Film oder Überzug, erhalten durch Vernetzung der Zusammensetzung **R** gemäß einem der Ansprüche 13 bis 18 auf thermischem oder aktinischem Wege.

22. Artikel, wobei mindestens eine Oberfläche davon mit einem gemäß dem gemäß einem der Ansprüche 19 oder 20 definierten Verfahren erhaltenen Film oder Überzug überzogen ist.

## Claims

1. Composition **P** comprising:
1) at least one iodonium salt **A** of formula **(I)'** below: 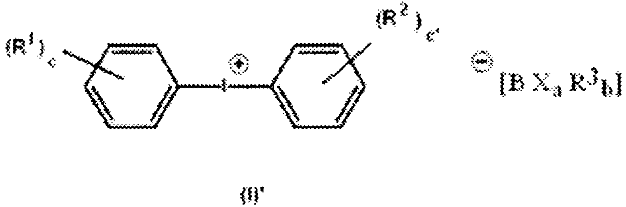 wherein:
- the symbols R¹ and R² are identical or different, and each represent a linear or branched alkyl radical having from 10 to 30 carbon atoms and preferably from 10 to 20 carbon atoms, even more preferentially from 10 to 15 carbon atoms, even more preferentially from 10 to 13 carbon atoms and even more preferentially 12 carbon atoms,
- a and b are integers such that 0 ≤ a ≤ 3, 1 ≤ b ≤ 4 and a + b = 4,
- c and c' are integers, which may be identical or different, ranging from 1 to 5 and preferably c and c' are equal to 1,
- the symbols X, which may be identical or different, represent:
• a chlorine or fluorine atom with 0 ≤ a ≤ 3, or
• an OH function with 0 ≤ a ≤ 2, and
- the symbols R³, which may be identical or different, represent:
• a phenyl radical substituted with:
- at least 2 halogen atoms, and preferably with at least 2 fluorine atoms, or
- at least one electron-withdrawing group chosen from the group consisting of : -CF₃, -OCF₃, -NO₂, -CN, -SO₂-CₙF₂ₙ₊, - (CO) -CₙF₂ₙ₊₁, -O-CₙF₂ₙ₊₁ and -CₙF₂ₙ₊₁, with n being an integer from 1 to 20, or
• an aryl radical containing at least two aromatic nuclei, such as biphenyl, naphthyl, optionally substituted with at least one halogen atom, in particular a fluorine atom, or an electron-withdrawing group such as: -CF₃, -OCF₃, -NO₂, -CN, -SO₂-CₙF₂ₙ₊, - (CO) -CₙF₂ₙ₊₁, -O-CₙF₂ₙ₊₁ and -CₙF₂ₙ₊₁, with n being an integer from 1 to 20,
2) at least one hydrogen donor **B** chosen from the group consisting of Guerbet alcohols of formula **(II)** below:
R⁴-CH(CH₂OH)-R⁵ **(II)**
wherein:
- the symbols R⁴ and R⁵ are identical or different, and each represent an alkyl radical having from 4 to 12 carbon atoms, and
- with the additional condition that the total number of carbon atoms of said Guerbet alcohol is from 10 to 20 carbon atoms, and
3) optionally at least one thermal stabilizer **C.**

2. Composition **P** acording to Claim 1, comprising:
1) at least one iodonium salt **A** of formula **(I)** below: 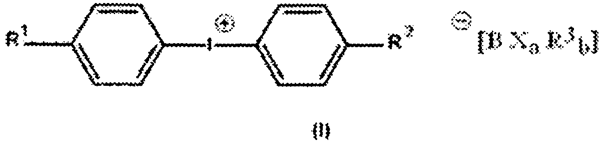 wherein:
- the symbols R¹ and R² are identical or different, and each represent a linear or branched alkyl radical having from 10 to 30 carbon atoms and preferably from 10 to 20 carbon atoms, even more preferentially from 10 to 15 carbon atoms, even more preferentially from 10 to 13 carbon atoms and even more preferentially 12 carbon atoms,
- a and b are integers such that 0 ≤ a ≤ 3, 1 ≤ b ≤ 4 and a + b = 4,
- the symbols X, which may be identical or different, represent:
• a chlorine or fluorine atom with 0 ≤ a ≤ 3, or
• an OH function with 0 ≤ a ≤ 2, and
- the symbols R³, which may be identical or different, represent:
• a phenyl radical substituted with:
- at least 2 halogen atoms, and preferably with at least 2 fluorine atoms, or
- at least one electron-withdrawing group chosen from the group consisting of : -CF₃, -OCF₃, -NO₂, -CN, -SO₂-CₙF₂ₙ₊, - (CO) -CₙF₂ₙ₊₁, -O-CₙF₂ₙ₊₁ and -CₙF₂ₙ₊₁, with n being an integer from 1 to 20, or
• an aryl radical containing at least two aromatic nuclei, such as biphenyl, naphthyl, optionally substituted with at least one halogen atom, in particular a fluorine atom, or an electron-withdrawing group such as: -CF₃, -OCF₃, -NO₂, -CN, -SO₂-CₙF₂ₙ₊, - (CO) -CₙF₂ₙ₊₁, -O-CₙF₂ₙ₊₁ and CₙF₂ₙ₊₁, with n being an integer from 1 to 20,
2) at least one hydrogen donor **B** chosen from the group consisting of Guerbet alcohols of formula (II) below:
R⁴-CH(CH₂OH)-R⁵ **(II)**
wherein:
- the symbols R⁴ and R⁵ are identical or different, and each represent an alkyl radical having from 4 to 12 carbon atoms, and
- with the additional condition that the total number of carbon atoms of said Guerbet alcohol is from 10 to 20 carbon atoms, and
3) optionally at least one thermal stabilizer **C.**

3. Composition **P** acording to either one of the preceding claims, wherein the anion of the iodonium salt **A** is chosen from the group consisting of the following anions: [B(C₆F₅)₄]⁻, [B(C₆H₃(CF₃)₂)₄]⁻, [B(C₆H₄OCF₃)₄]⁻, [B(C₆H₄CF₃)₄]⁻, [(C₆F₅)₂BF₂]⁻, (C₆F₅BF₃]⁻ and [B(C₆H₃F₂)₄]⁻ and preferably from the subgroup consisting of the following anions: B(C₆F₅)₄⁻ and [B(C₆H₃(CF₃)₂)₄⁻.

4. Composition **P** acording to Claim 1 or 2, wherein the hydrogen donor **B** is a Guerbet alcohol which has the formula below: 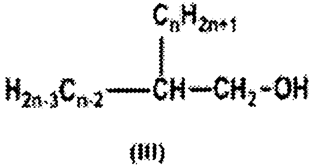 wherein the symbol n is an integer from 6 to 10.

5. Composition **P** acording to Claim 1, 2 or 4, wherein the hydrogen donor **B** is chosen from the group consisting of the following Guerbet alcohols: 2-butyl-1-octanol, 2-pentyl-1-nonanol, 2-hexyldecan-1-ol, 2-octyldecan-1-ol and 2-octyldodecan-1-ol, and mixtures thereof.

6. Composition **P** acording to Claim 1 or 2, comprising:
a) 1 to 95 parts by weight, preferably from 20 to 80 parts by weight relative to the total weight of the composition **P,** of the iodonium salt(s) **A,**
b) 5 to 99 parts by weight, preferably from 20 to 80 parts by weight relative to the total weight of the composition **P,** of at least one hydrogen donor **B,** and
c) 0 to 5 parts by weight relative to the total weight of the composition **P,** of at least one thermal stabilizer **C.**

7. Composition **P** acording to Claim 1, 2 or 6, wherein the thermal stabilizer **C** is chosen from the group consisting of: an amine, a compound of which the chemical structure comprises a sterically hindered group and a nitroxyl function, a compound of which the chemical structure comprises a sterically hindered group and a phenol function, an organophosphorus compound, and combinations thereof.

8. Composition **P** acording to Claim 1, 2 or 6, wherein the iodonium salt **A** has the formula **(IV)** below: 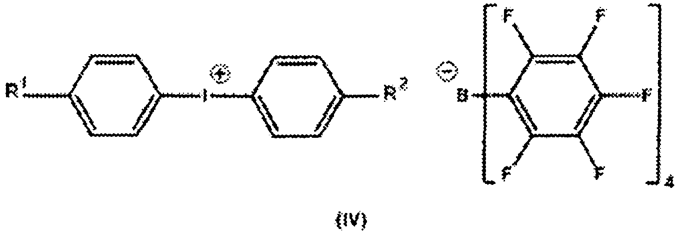 wherein:
- the symbols R¹ and R² are identical or different, and each represent a linear or branched alkyl radical having from 10 to 30 carbon atoms and preferably from 10 to 20 carbon atoms and even more preferentially from 10 to 15 carbon atoms.

9. Composition **P** acording to Claim 1, 2 or 8, wherein the symbols R¹ and R² are identical or different, and each represent an alkyl radical chosen from the group consisting of the following radicals: 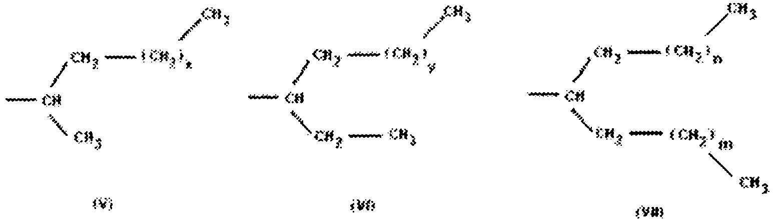 with:
- x is an integer ranging from 6 to 16 and preferably from 6 to 11,
- y is an integer ranging from 5 to 15 and preferably from 5 to 10, and
- n and m are integers which may be identical or different and the sum n+m of which is between 5 and 15 (limits included).

10. Use of the composition **P** as defined in any one of the preceding claims, as a cationic photoinitiator.

11. Process for preparing the composition **P** as defined in any one of Claims 1 to 9, comprising the following steps:
a) precursor salts of formulae **(VIII)'** and **(IX)'** below are prepared: 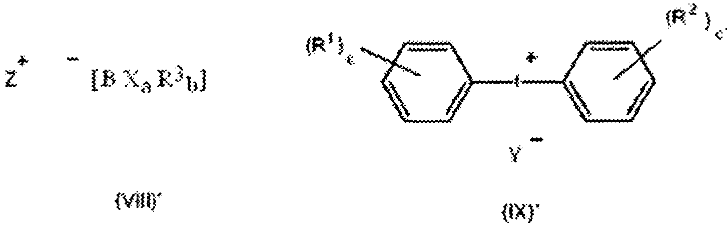 in which formulae:
- the symbols R¹ and R² are identical or different, and each represent a linear or branched alkyl radical having from 10 to 30 carbon atoms and preferably from 10 to 20 carbon atoms and even more preferentially from 10 to 15 carbon atoms,
- a and b are integers such that 0 ≤ a ≤ 3, 1 ≤ b ≤ 4 and a + b = 4,
- c and c' are integers, which may be identical or different, ranging from 1 to 5 and preferably c and c' are equal to 1,
- the symbols X, which may be identical or different, represent:
- a chlorine or fluorine atom with 0 ≤ a ≤ 3, or
- an OH function with 0 ≤ a ≤ 2, and
- the symbols R³, which may be identical or different, represent:
- a phenyl radical substituted with:
- at least 2 halogen atoms, and preferably with at least 2 fluorine atoms, or
- at least one electron-withdrawing group chosen from the group consisting of : -CF₃, -OCF₃, -NO₂ -CN, -SO₂-CₙF₂ₙ₊, -(CO)-CₙF₂ₙ₊₁, -O-CₙF₂ₙ₊₁ and CₙF₂ₙ₊₁, with n being an integer from 1 to 20, or
- an aryl radical containing at least two aromatic nuclei, such as biphenyl, naphthyl, optionally substituted with at least one halogen atom, in particular a fluorine atom, or an electron-withdrawing group such as:-CF₃, -OCF₃, -NO₂, -CN, -SO₂-CₙF₂ₙ₊, -(CO)-CₙF₂ₙ₊₁, -O-CₙF₂ₙ₊₁ and CₙF₂ₙ₊₁, with n being an integer from 1 to 20,
- the symbol Z⁺ is a cation of an atom or of a group of atoms and preferably the symbol Z⁺ is Na⁺, Li⁺ or K⁺, and
- the symbol Y is an anion of an atom or of a group of atoms and preferably Y⁻ is the bromide (Br⁻) or iodide (I⁻) anion,
b) a mixture No. 1 is prepared, consisting of a precursor salt of formula **(VIII)** and water, and a mixture No. 2 is prepared, consisting of at least one precursor salt of formula **(IX)** and at least one Guerbet alcohol according to the invention and as described above,
c) mixture No. 1 or mixture No. 2 is placed in a reactor with stirring and optionally under reflux, and the temperature of the reactor is preferably raised and maintained in a range of between 30 and 80°C and even more preferentially in a range of between 50 and 80°C,
d) then either mixture No. 1, when, in step c), mixture No. 2 is present in the reactor, or mixture No. 2, when, in step c), mixture No. 1 is present in the reactor, is added with stirring, and the temperature of the reactor is preferably maintained in a range of between 30 and 80°C and even more preferentially in a range of between 50 and 80°C,
e) when the reaction has ended, the reactor is optionally cooled and the organic phase is separated from the aqueous phase,
f) optionally, the organic phase is washed with water,
g) optionally, the organic phase is devolatilized, and
h) the organic phase is recovered, which is the composition **P** to which at least one thermal stabilizer **C** is optionally added.

12. Process for preparing the composition **P** as defined in any one of Claims 1 to 9, comprising the following steps:
a) precursor salts of formulae **(VIII)** and **(IX)** below are prepared: 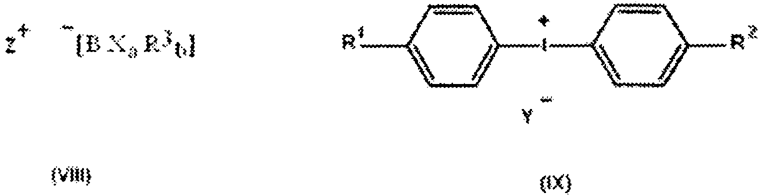 in which formulae:
- the symbols R¹ and R² are identical or different, and each represent a linear or branched alkyl radical having from 10 to 30 carbon atoms and preferably from 10 to 20 carbon atoms and even more preferentially from 10 to 15 carbon atoms,
- a and b are integers such that 0 ≤ a ≤ 3, 1 ≤ b ≤ 4 and a + b = 4,
- the symbols X, which may be identical or different, represent:
- a chlorine or fluorine atom with 0 ≤ a ≤ 3, or
- an OH function with 0 ≤ a ≤ 2, and
- the symbols R³, which may be identical or different, represent:
- a phenyl radical substituted with:
- at least 2 halogen atoms, and preferably with at least 2 fluorine atoms, or
- at least one electron-withdrawing group chosen from the group consisting of : -CF₃, -OCF₃, -NO₂, -CN, -SO₂-CₙF₂ₙ₊, -(CO)-CₙF₂ₙ₊₁, -O-CₙF₂ₙ₊₁ and CₙF₂ₙ₊₁, with n being an integer from 1 to 20, or
- an aryl radical containing at least two aromatic nuclei, such as biphenyl, naphthyl, optionally substituted with at least one halogen atom, in particular a fluorine atom, or an electron-withdrawing group such as: -CF₃, -OCF₃, -NO₂, -CN, -SO₂-CₙF₂ₙ₊, -(CO)-CₙF₂ₙ₊₁, -O-CₙF₂ₙ₊₁ and CₙF₂ₙ₊₁, with n being an integer from 1 to 20,
- the symbol Z⁺ is a cation of an atom or of a group of atoms and preferably the symbol Z⁺ is Na⁺, Li⁺ or K⁺, and
- the symbol Y⁻ is an anion of an atom or of a group of atoms and preferably Y⁻ is the bromide (Br⁻) or iodide (I⁻) anion,
b) a mixture No. 1 is prepared, consisting of a precursor salt of formula **(VIII)** and water, and a mixture No. 2 is prepared, consisting of at least one precursor salt of formula **(IX)** and at least one Guerbet alcohol according to the invention and as described above,
c) mixture No. 1 or mixture No. 2 is placed in a reactor with stirring and optionally under reflux, and the temperature of the reactor is preferably raised and maintained in a range of between 30 and 80°C and even more preferentially in a range of between 50 and 80°C,
d) then either mixture No. 1, when, in step c), mixture No. 2 is present in the reactor, or mixture No. 2, when, in step c), mixture No. 1 is present in the reactor, is added with stirring, and the temperature of the reactor is preferably maintained in a range of between 30 and 80°C and even more preferentially in a range of between 50 and 80°C,
e) when the reaction has ended, the reactor is optionally cooled and the organic phase is separated from the aqueous phase,
f) optionally, the organic phase is washed with water,
g) optionally, the organic phase is devolatilized, and
h) the organic phase is recovered, which is the composition **P** to which at least one thermal stabilizer **C** is optionally added.

13. Composition **R** which is polymerizable and/or crosslinkable cationically, under activation which is thermal and/or actinic and/or by an electron beam, comprising:
- at least one cationically polymerizable and/or crosslinkable organosilicon compound **D,**
- an effective catalytic amount of the composition **P** as defined in any one of Claims 1 to 9 as a cationic photoinitiator,
- optionally an effective amount of at least one photosensitizer **E,**
- optionally at least one organic solvent **F,**
- optionally at least one additive **Q,**
- optionally at least one thermal stabilizer **C** and preferably as defined in Claim 7, and
- optionally at least one monomer, oligomer and/or polymer **H** comprising organofunctional groups of acrylate kind.

14. Composition **R** acording to Claim 13, wherein the organosilicon compound **D** is a polyorganosiloxane comprising at least two silicon atoms and comprising:
- at least one siloxyl unit of formula **(VIII)** and preferably at least two siloxyl units of formula **(VIII)** below:
Z1(R⁸)₃SiO₍₃₋₃₎₂ **(VIII)**
wherein:
- a = 0, 1 or 2,
- R⁰, which may be identical or different when a > 1, represents an alkyl, cycloalkyl, aryl, alkenyl, hydrogeno or alkoxy radial and preferably a C₁ to C₆ alkyl,
- Z¹, which may be identical or different when the number of units of formula **(VIII)** is greater than 1, is an organic substituent comprising at least one reactive function **G** chosen from the group consisting of the functions: epoxy, alkenyl ether, oxetane, dioxolane, (meth)acrylate and carbonate, and preferably Z¹ is chosen from the group consisting of epoxy and dioxolane functions, and
- optionally at least one siloxyl unit of formula **(IX)** below: 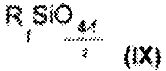 wherein:
- f = 0, 1, 2 or 3, and
- the symbols R represent, independently of one another, monovalent radicals chosen from the group consisting of an alkyl, a cycloalkyl, an aryl, an alkenyl, a hydrogeno radical and an alkoxy radical.

15. Composition **R** acording to Claim 13, wherein the organosilicon compound **D** is a silane comprising an organic substituent comprising at least one reactive function **G** chosen from the group consisting of the functions: oxirane, alkenyl ether, oxetane, dioxolane, (meth)acrylate and carbonate, and preferably chosen from the group consisting of epoxy and dioxolane functions.

16. Composition **R** acording to Claim 14 or 15, wherein the reactive function **G** is chosen from the following groups **(1)** to **(11):** 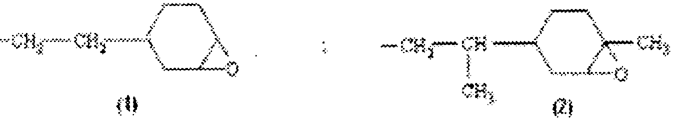 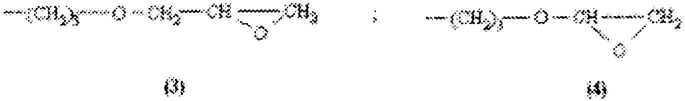 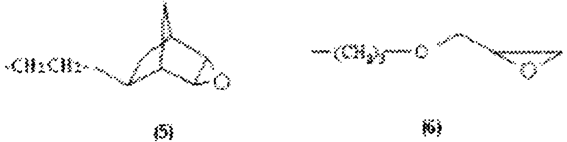 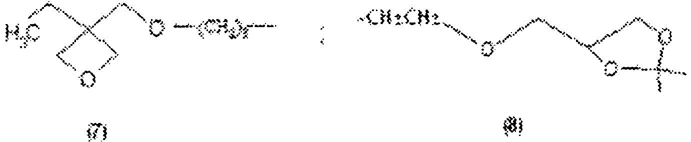 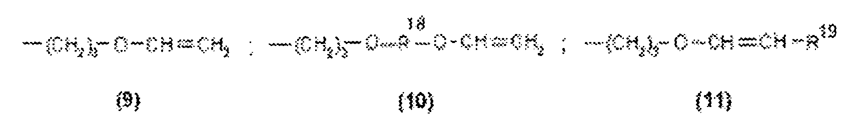 in which formulae:
• R¹⁸ represents:
- a linear or branched, optionally substituted, C₁-C₁₂ alkylene radical,
- or a C₅-C₁₂ arylene, preferably phenylene, radical which is optionally substituted, preferably with one to three C₁-C₆ alkyl groups, and
• R¹⁹ represents a linear or branched C₁-C₆ alkyl radical.

17. Composition **R** acording to Claim 14, wherein the organosilicon compound **D** is chosen from the group consisting of the following compounds **(12)** to **(24) :** 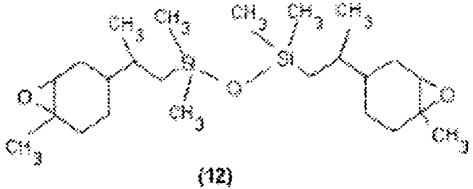 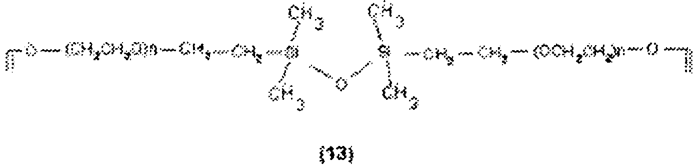 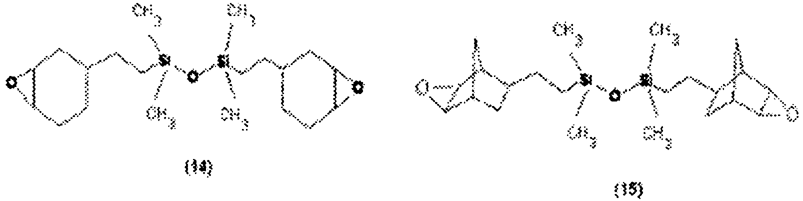 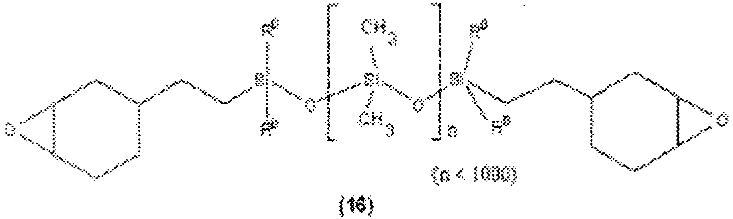 in which formulae R⁰ is a C₁ to C₂₀ alkyl group and preferably a methyl group; 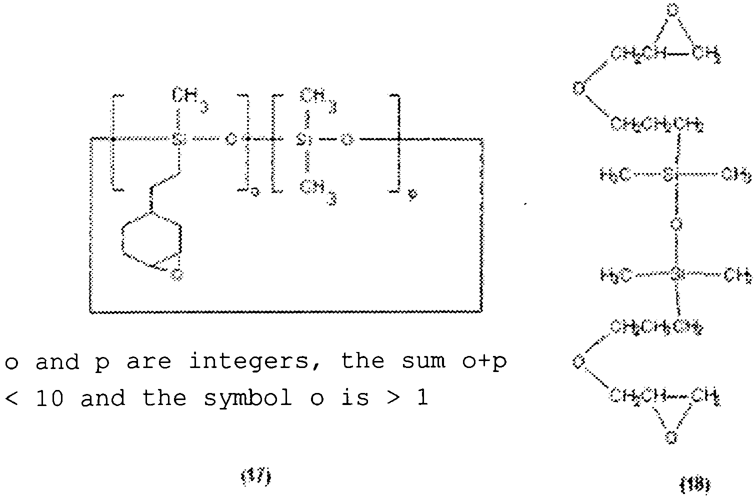 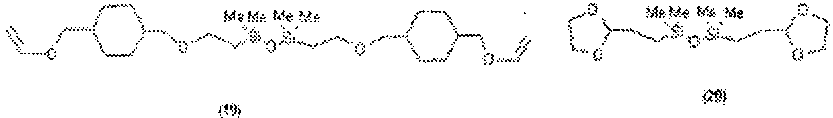 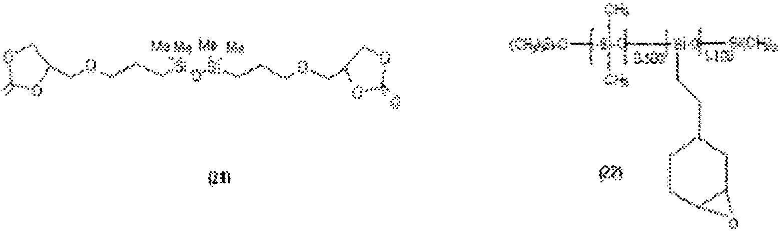 in which formulae the symbols Me signify a methyl group.

18. Composition **R** acording to Claim 15, wherein the organosilicon compound **D** is the following silane:

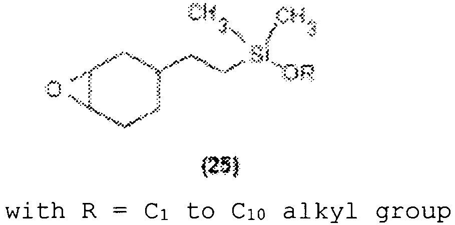

19. Process for making articles non-stick with respect to surfaces to which they would normally adhere, **characterized in that** between 0.1 and 5 g per m² of surface of said article to be coated, of the composition R which is the subject of any one of Claims 13 to 18 is applied, and said composition is crosslinked by providing energy, at least one part or all of which is supplied photochemically or by an electron beam.

20. The process acording to Claim 19, **characterized in that** the crosslinking operation is carried out by UV irradiation having a wavelength of about 200 to 400 nanometers.

21. Film or coating obtained from the crosslinking of the composition **R** as defined in any one of Claims 13 to 18, thermally or actinically.

22. Article, at least one surface of which is coated with a film or a coating obtained according to the process defined in either one of Claims 19 and 20.
